(19) Europäisches Patentamt
European Patent Office
Office européen des brevets

(11) **EP 3 631 394 B1**

(12) **EUROPÄISCHE PATENTSCHRIFT**

(45) Veröffentlichungstag und Bekanntmachung des Hinweises auf die Patenterteilung:
**26.08.2020 Patentblatt 2020/35**

(21) Anmeldenummer: **18720607.3**

(22) Anmeldetag: **27.04.2018**

(51) Int Cl.:
*G01L 3/10* (2006.01)          *G01B 7/14* (2006.01)
*G01D 5/14* (2006.01)          *G01P 3/49* (2006.01)

(86) Internationale Anmeldenummer:
**PCT/EP2018/060858**

(87) Internationale Veröffentlichungsnummer:
**WO 2018/215167 (29.11.2018 Gazette 2018/48)**

(54) **VORRICHTUNG, ANORDNUNG UND VERFAHREN ZUM CHARAKTERISIEREN DER TORSION, DER ROTATION UND/ODER DER POSITIONIERUNG EINER WELLE**

DEVICE, ARRANGEMENT AND METHOD FOR CHARACTERISING THE TORSION, ROTATION AND/OR POSITIONING OF A SHAFT

DISPOSITIF, ENSEMBLE ET PROCÉDÉ SERVANT À CARACTÉRISER LA TORSION, LA ROTATION ET/OU LE POSITIONNEMENT D'UN ARBRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.05.2017 DE 102017111055**

(43) Veröffentlichungstag der Anmeldung:
**08.04.2020 Patentblatt 2020/15**

(73) Patentinhaber: **Helmholtz-Zentrum Dresden - Rossendorf e.V.**
**01328 Dresden (DE)**

(72) Erfinder: **BUCHENAU, Dominique**
**01328 Dresden (DE)**

(56) Entgegenhaltungen:
**EP-A1- 2 615 439          EP-A1- 2 615 439**
**WO-A1-2017/076876          WO-A1-2017/076876**
**DE-A1-102006 017 727          DE-A1-102006 017 727**

EP 3 631 394 B1

**Beschreibung**

Die Erfindung betrifft eine Vorrichtung, eine Anordnung und ein Verfahren zum Charakterisieren des Torsionszustandes und/oder des Rotationszustandes und/oder der Positionierung einer Welle.

In vielen Bereichen ist die Kenntnis der Torsions-, Rotations- und Lageparameter von rotierenden Wellen relevant, z.B. die Kenntnis der Drehgeschwindigkeit, des anliegenden Drehmoments oder der Lage bzw. Ausrichtung der Welle. In vielen Bereichen, z.B. im Schwermaschinenbau, im Förder- und Transportwesen, aber auch für Vakuumanlagen, Zentrifugaltechnologien und im Automotive-Sektor ist eine kontaktlose Bestimmung dieser Parameter vorteilhaft. Für die kontaktlose induktive Lage-, Drehzahl- oder Drehmomentbestimmung sind eine Vielzahl von unterschiedlichen Prinzipien bekannt. Als Beispiel ist in EP 2 549 255 B1 eine Sensoranordnung zur berührungslosen Bestimmung des wirksamen Drehmomentes in einer Welle beschrieben, zudem sind aus dem in EP 2 549 255 B1 benannten Stand der Technik weitere kontaktlose Messprinzipien bekannt. Herkömmliche Prinzipien zur kontaktlosen Wellencharakterisierung erfordern jedoch oftmals einen komplizierten Aufbau, eignen sich lediglich für ein kleines Anwendungsspektrum (z.B. aufgrund konstruktiver Erfordernisse oder aufgrund der Beschränkung auf lediglich einen einzigen erfassbaren Operationsparameter) und/oder liefern mit hohen Ungenauigkeiten behaftete Messergebnisse.

Die WO 2017/076876 A1 beschreibt eine Vorrichtung und ein Verfahren zur berührungslosen Erfassung von Drehmomenten, Torsionseigenfrequenzen und/oder Torsionspendelungen einer Welle mit ferromagnetischem Material mittels eines Messkopfes, wobei der Messkopf eine Erregerspule zum Einkoppeln eines magnetischen Feldes in die Welle und mehrere Messspulen zum Messen des die Welle verlassenden magnetischen Feldes aufweist.

Die EP 2 615 439 A1 beschreibt einen magnetoelastischen Kraftsensor und ein Verfahren zum Kompensieren einer Abstandsabhängigkeit in einem Messsignal eines derartigen Sensors, wobei der Kraftsensor einen Sensorkopf mit einer Sendespule zum Erzeugen eines Magnetfeldes und mindestens einen Magnetfeldsensor zum Messen eines durch das Magnetfeld in einem Messobjekt verursachten magnetischen Flusses aufweist.

Die DE 10 2006 017727 A1 beschreibt eine Vorrichtung und ein Verfahren zur berührungslosen Bestimmung von Eigenschaften einer Welle, wobei die Vorrichtung eine Erregerspule und symmetrisch zu derselben angeordnete Sensorspulen aufweist, wobei die Erregerspule und zwei Sensorspulen in den Ecken eines gleichschenkligen Dreiecks angeordnet sind.

Durch die Erfindung soll eine unkomplizierte, vielseitig einsetzbare Vorrichtung zum kontaktlosen Charakterisieren des Torsionszustandes, des Rotationszustandes und/oder der Positionierung einer Welle bereitgestellt werden, mittels derer ein Erfassen der Operationsparameter der Welle mit hoher Genauigkeit ermöglicht ist.

Gemäß einem ersten Aspekt der Erfindung wird eine Vorrichtung zum Charakterisieren (z.B. Erfassen oder Messen) der Torsion und/oder der Rotation und/oder der Positionierung einer (z.B. drehbaren) Welle bereitgestellt, wobei die Vorrichtung im Folgenden auch als Messvorrichtung bezeichnet wird.

Die Welle kann eine Hohlwelle oder eine Vollwelle sein. Die Welle weist ferromagnetisches Material auf, d.h. die Welle besteht zumindest teilweise (d.h. teilweise oder vollständig) aus ferromagnetischem Material. Es kann z.B. vorgesehen sein, dass die Welle an ihrem Außenumfang eine Beschichtung mit ferromagnetischem Material aufweist (d.h. die Beschichtung besteht teilweise oder vollständig aus ferromagnetischem Material), wobei der Rest der Welle aus nicht ferromagnetischem Material bestehen kann. Das ferromagnetische Material ist zudem bevorzugt elektrisch leitfähig.

Die Messvorrichtung weist einen Magnetfelderzeuger zum Erzeugen eines Magnetfeldes auf. Der Magnetfelderzeuger ist eine Vorrichtung, von der bei Beaufschlagung mit einem elektrischen Signal, d.h. bei Beaufschlagung mit einem elektrischen Strom oder einer elektrischen Spannung, ein Magnetfeld in Abhängigkeit von dem Signal erzeugt wird (das Signal wird nachfolgend auch als Erregersignal oder Eingangssignal bezeichnet). Es kann vorgesehen sein, dass die Messvorrichtung genau einen einzigen Magnetfelderzeuger aufweist. Der Magnetfelderzeuger kann z.B. eine Spule sein (nachfolgend auch als Erregerspule oder Magnetfelderzeuger-Spule bezeichnet). Bei Ausbildung des Magnetfelderzeugers der Messvorrichtung als Erregerspule ist die Erregerspulen derart ausgebildet, dass sie eine geradlinige Spulenachse (auch als Erregerspulen-Achse bezeichnet) aufweist.

Die Messvorrichtung weist zudem mindestens einen ersten und einen zweiten Magnetfelddetektor zum Erfassen eines Magnetfeldes auf. Der erste Magnetfelddetektor ist bevorzugt identisch zu dem zweiten Magnetfelddetektor ausgebildet. Es kann auch vorgesehen sein, dass die Messvorrichtung zusätzlich zu dem ersten und dem zweiten Magnetfelddetektor einen dritten und einen vierten Magnetfelddetektor aufweist. Der dritte Magnetfelddetektor ist bevorzugt identisch zu dem vierten Magnetfelddetektor ausgebildet. Die Messvorrichtung weist bevorzugt eine gerade Anzahl an Magnetfelddetektoren auf. Bevorzugt sind alle Magnetfelddetektoren der Messvorrichtung identisch ausgebildet. Die Magnetfelddetektoren sind Vorrichtungen, von denen bei Beaufschlagung mit einem externen Magnetfeld ein elektrisches Signal, d.h. ein elektrischer Strom oder eine elektrische Spannung, in Abhängigkeit von dem externen Magnetfeld erzeugt wird (diese Signale werden nachfolgend auch als Ausgangssignale oder Empfängersignale bezeichnet). Die Magnetfelddetektoren der Messvorrichtung können z.B. als Hall-Detektoren ausgebildet sein.

Als ein anderes Beispiel kann jeder der Magnetfelddetektoren der Messvorrichtung z.B. eine Spule sein (nachfolgend auch als Empfängerspule oder Magnetfelddetektor-Spule bezeichnet). Demgemäß kann der erste Magnetfelddetektor eine erste Empfängerspule sein und/oder der zweite Magnetfelddetektor eine zweite Empfängerspule sein. Bei Ausbildung der Messvorrichtung mit einem dritten und einem vierten Magnetfelddetektor kann der dritte Magnetfelddetektor eine dritte Empfängerspule und/oder der vierte Magnetfelddetektor eine vierte Empfängerspule sein. Bei Ausbildung der Magnetfelddetektoren der Messvorrichtung als Empfängerspulen sind die Empfängerspulen derart ausgebildet und angeordnet, dass jede der Empfängerspulen eine geradlinige Spulenachse (auch als Empfängerspulen-Achse bezeichnet) aufweist, wobei alle Empfängerspulen-Achsen in einem Abstand zueinander parallel zueinander verlaufen.

Bei Ausbildung des Magnetfelderzeugers als Erregerspule und der Magnetfelddetektoren als Empfängerspulen sind die Spulen derart angeordnet, dass ihre Spulenachsen jeweils in einem Abstand zueinander parallel zueinander verlaufen, sodass die Empfängerspulen-Achsen parallel zu der Erregerspulen-Achse verlaufen. Die Erregerspule und/oder die Empfängerspulen können z.B. jeweils rotationssymmetrisch bezüglich ihrer Spulenachse ausgebildet sein. Es kann jedoch auch vorgesehen sein, dass die Erregerspule und/oder die Empfängerspulen nicht rotationssymmetrische bezüglich ihrer Spulenachse sind (sondern z.B. mit einem rechteckigen Querschnitt ausgebildet sind). Zudem kann vorgesehen sein, dass die Erregerspule und die Empfängerspulen identisch zueinander ausgebildet sind, sodass insbesondere die Erregerspule identisch zu den Empfängerspulen ausgebildet ist. Dadurch ist eine Verbesserung der Messgenauigkeit der Messvorrichtung ermöglicht.

Es kann vorgesehen sein, dass der Magnetfelderzeuger und die Magnetfelddetektoren der Messvorrichtung zu einem gemeinsamen Sensorelement der Messvorrichtung kombiniert sind. Demgemäß kann vorgesehen sein, dass die Messvorrichtung ein Sensorelement aufweist, wobei das Sensorelement den Magnetfelderzeuger und die Magnetfelddetektoren der Messvorrichtung aufweist. Das Sensorelement fungiert als Messkopf der Messvorrichtung und wird beim Betreiben der Messvorrichtung seitlich neben der zu charakterisierenden Welle angeordnet.

Der Magnetfelderzeuger ist zwischen dem ersten und dem zweiten Magnetfelddetektor angeordnet. Der Magnetfelderzeuger ist somit auf einer zwischen dem ersten und dem zweiten Magnetfelddetektor verlaufenden Verbindungslinie angeordnet, wobei diese Verbindungslinie auch als Hauptachse oder Sensor-Hauptachse bezeichnet wird. Der erste und der zweite Magnetfelddetektor sowie der Magnetfelderzeuger sind somit an Positionen auf bzw. entlang der Sensor-Hauptachse angeordnet. Der Magnetfelderzeuger ist bevorzugt mittig zwischen dem ersten und dem zweiten Magnetfelddetektor angeordnet, sodass der erste und der zweite Magnetfelddetektor äquidistant symmetrisch beidseitig des Magnetfelderzeugers angeordnet sind. Bei Ausbildung des Magnetfelderzeugers, des ersten und des zweiten Magnetfelddetektors als Spulen sind die Spulen bevorzugt derart angeordnet, dass ihre Spulenachsen parallel zueinander in einer gemeinsamen Ebene verlaufen, wobei diese Ebene durch die Sensor-Hauptachse verläuft. Der Magnetfelderzeuger kann insbesondere derart ausgebildet und angeordnet sein, dass das von ihm erzeugte Magnetfeld zumindest einen Anteil aufweist, der senkrecht zu der Sensor-Hauptachse ist, sodass das von dem Magnetfelderzeuger erzeugte Magnetfeld eine senkrecht zu der Sensor-Hauptachse verlaufende Komponente aufweist oder vollständig senkrecht zu der Sensor-Hauptachse ist.

Bei Ausbildung des Magnetfelderzeugers als Erregerspule ist die Erregerspule bevorzugt derart angeordnet, dass die Erregerspulen-Achse senkrecht zu der Sensor-Hauptachse ist. Bei Ausbildung der Magnetfelddetektoren als Empfängerspulen sind die Empfängerspulen bevorzugt derart angeordnet, dass die Empfängerspulen-Achsen senkrecht zu der Sensor-Hauptachse sind.

Bei Ausbildung der Messvorrichtung mit einem dritten und einem vierten Magnetfelddetektor ist der Magnetfelderzeuger zudem zwischen dem dritten und dem vierten Magnetfelddetektor angeordnet. In diesem Fall ist der Magnetfelderzeuger somit auf einer zwischen dem dritten und dem vierten Magnetfelddetektor verlaufenden Verbindungslinie angeordnet, wobei diese Verbindungslinie auch als Nebenachse oder Sensor-Nebenachse bezeichnet wird. Der dritte und der vierte Magnetfelddetektor sowie der Magnetfelderzeuger sind somit an Positionen auf bzw. entlang der Sensor-Nebenachse angeordnet. Der Magnetfelderzeuger ist bevorzugt mittig zwischen dem dritten und dem vierten Magnetfelddetektor angeordnet, sodass der dritte und der vierte Magnetfelddetektor äquidistant symmetrisch beidseitig des Magnetfelderzeugers angeordnet sind. Bei Ausbildung des Magnetfelderzeugers, des dritten und des vierten Magnetfelddetektors als Spulen sind die Spulen bevorzugt derart angeordnet, dass ihre Spulenachsen parallel zueinander in einer gemeinsamen Ebene verlaufen, wobei diese Ebene durch die Sensor-Nebenachse verläuft. Die Sensor-Nebenachse verläuft bevorzugt senkrecht zu der Sensor-Hauptachse, sodass die Sensor-Nebenachse und die Sensor-Hauptachse ein rechtwinkliges Kreuz bilden. Der erste, zweite, dritte und vierte Magnetfelddetektor sind bevorzugt äquidistant zu dem Magnetfelderzeuger angeordnet, d.h. weisen alle den gleichen Abstand zu dem Magnetfelderzeuger auf. Der Magnetfelderzeuger kann insbesondere derart ausgebildet und angeordnet sein, dass das von ihm erzeugte Magnetfeld zumindest einen Anteil aufweist, der senkrecht zu der Sensor-Nebenachse ist, sodass das von dem Magnetfelderzeuger erzeugte Magnetfeld eine senkrecht zu der Sensor-Nebenachse verlaufende Komponente aufweist oder vollständig senkrecht zu der Sensor-Nebenachse ist. Der Magnetfelderzeuger ist bevorzugt derart ausgebildet und angeordnet, dass das von ihm erzeugte Magnetfeld zumindest einen Anteil aufweist, der senkrecht zu der von der Sensor-Hauptachse und der Sensor-Nebenachse aufgespannten Ebene (auch als Sensor-Ebene bezeichnet) ist, sodass das von dem Magnetfelderzeuger erzeugte Magnetfeld eine senkrecht zu dieser Ebene verlaufende Komponente aufweist oder vollständig senkrecht zu dieser Ebene ist.

Der Magnetfelderzeuger kann z.B. derart ausgebildet und angeordnet sein, dass das von ihm erzeugte Magnetfeld symmetrisch bezüglich einer Ebene ist, die senkrecht zu der Sensor-Hauptachse ist oder einen Winkel von 45° mit der Sensor-Hauptachse und/oder der Sensor-Nebenachse bildet. Der Magnetfelderzeuger kann z.B. derart ausgebildet sein, dass das von ihm erzeugte Magnetfeld rotationssymmetrisch ist, insbesondere rotationssymmetrisch bezüglich einer senkrecht zu der Sensor-Hauptachse und/oder der Sensor-Nebenachse verlaufenden Richtung, z.B. rotationssymmetrisch bezüglich der Normale der Sensor-Ebene.

Bei Ausbildung des Magnetfelderzeugers als Erregerspule ist die Erregerspule bevorzugt derart angeordnet, dass die Erregerspulen-Achse senkrecht zu der Sensor-Nebenachse ist. Bei Ausbildung der Magnetfelddetektoren als Empfängerspulen sind die Empfängerspulen bevorzugt derart angeordnet, dass die Empfängerspulen-Achsen senkrecht zu der Sensor-Nebenachse sind. Demgemäß können die Erregerspule und die Empfängerspulen derart angeordnet sein, dass ihre Spulenachsen senkrecht zu der Sensor-Ebene sind.

Die Messvorrichtung ist (z.B. mittels einer dafür ausgebildeten elektrischen Energiequelle) zum Beaufschlagen des Magnetfelderzeugers mit einem zeitlich periodisch variierenden elektrischen Erregersignal ausgebildet, d.h. zum Beaufschlagen des Magnetfelderzeugers mit einem periodisch variierenden elektrischen Strom oder einer periodisch variierenden elektrischen Spannung. Die Messvorrichtung ist somit zum Beaufschlagen des Magnetfelderzeugers mit einem periodischen Erregersignal mit einer vorgegebenen Frequenz ausgebildet. Die Messvorrichtung kann z.B. zum Beaufschlagen des Magnetfelderzeugers mit einem harmonischen Erregersignal, d.h. einem Strom oder einer Spannung mit einem sinusförmigen Zeitverlauf, ausgebildet sein. Das Erregersignal kann insbesondere ein Wechselstrom oder eine Wechselspannung sein, insbesondere ein harmonischer Wechselstrom oder eine harmonische Wechselspannung mit einer vorgegebenen Frequenz.

Beim Betreiben der Messvorrichtung wird der Magnetfelderzeuger (z.B. ausgebildet als Erregerspule) von der Messvorrichtung mit dem periodischen Erregersignal beaufschlagt, wodurch von dem Magnetfelderzeuger ein zeitlich periodisches Magnetfeld mit einer zeitlich periodisch variierenden Feldstärke erzeugt wird. Das aufgrund des Erregersignals von dem Magnetfelderzeuger erzeugte Magnetfeld wird auch als Primär-Magnetfeld oder Erregerfeld bezeichnet. Bei Ausbildung des Erregersignals als Wechselstrom oder Wechselspannung ist das Erregerfeld ein magnetisches Wechselfeld.

Das von dem Magnetfelderzeuger erzeugte Erregerfeld wechselwirkt mit dem ferromagnetischen Material der zu charakterisierenden Welle, wodurch ein weiteres Magnetfeld erzeugt wird (auch als induziertes Magnetfeld oder Sekundär-Magnetfeld bezeichnet). Die Wechselwirkung und somit auch das Sekundär-Magnetfeld sind abhängig von dem Torsionszustand und dem Rotationszustand der Welle sowie von der Positionierung der Welle relativ zu der Messvorrichtung, wobei das durch die Überlagerung des Primär-Magnetfeldes und des Sekundär-Magnetfeldes resultierende Gesamt-Magnetfeld sich in Phase und/oder Amplitude von dem Primär-Magnetfeld unterscheidet. So ist das Sekundär-Magnetfeld z.B. abhängig von der Rotationsgeschwindigkeit (ausgedrückt durch die Tangentialgeschwindigkeit oder Winkelgeschwindigkeit) der Welle, von dem an der Welle anliegenden Drehmoment und der (z.B. damit einhergehenden) Torsion der Welle, und von dem Abstand zwischen der Messvorrichtung und der Welle.

Eine Rotation der Welle geht z.B. mit einer Bewegung des ferromagnetischen und elektrisch leitfähigen Materials der Welle in dem Erregerfeld einher, was zu einer Induktion von elektrischen Strömen in dem Material führt. Von den induzierten elektrischen Strömen wird ein induziertes Magnetfeld erzeugt, das sich dem Erregerfeld überlagert und dieses in Amplitude und/oder Phase ändert, wobei die Änderung in Amplitude bzw. Phase proportional zu der Umlaufgeschwindigkeit der Welle in dem Erregerfeld ist.

Des Weiteren kann eine Übertragung eines Drehmoments z.B. mit einer Torsion der Welle einhergehen. Die elastische und somit reversible Verformung eines Festkörpers wird durch das Hookesche Gesetz beschrieben, wonach eine Krafteinwirkung auf einen elastisch verformbaren Körper sich in einer Änderung der Geometrie des belasteten Körpers äußert. Eine auf Torsion belastete (zylindersymmetrische) Welle erfährt demgemäß einen gegensinnigen Verformungszustand, welcher durch Zuglinien und Druckspannungslinien charakterisierbar ist. Entlang der Zuglinien wird das Material gedehnt, wohingegen es entlang der Drucklinien gestaucht wird. Die Stauchung und Streckung des ferromagnetischen Materials der Welle bewirkt eine Änderung des Spannungszustandes, welche wiederum mit einer Änderung der magnetischen Eigenschaften des ferromagnetischen Wellenmaterials einhergeht. So erfolgt z.B. eine unterschiedliche Variation der magnetischen Eigenschaften des ferromagnetischen Wellenmaterials in Zug- und in Druckrichtung, falls eine Vorzugsrichtung vorgegeben ist. Als Beispiel erfolgt bei einer ferromagnetischen Beschichtung einer Welle (bzw. bei einem rotationssymmetrischen Hohlzylinder aus einem ferromagnetischen Material) eine Erhöhung der magnetischen Suszeptibilität in Zugrichtung und eine Verringerung der magnetischen Suszeptibilität in Druckrichtung. Für magnetische Materialien ohne Vorzugsrichtung bewirkt die Torsionsbelastung lediglich eine Verschlechterung der Magnetisierbarkeit. So bewirkt z.B. bei einer Vollwelle aus einem ferromagnetischen Material eine Torsion im Wesentlichen eine Verschlechterung der Magnetisierbarkeit. Mess- bzw. Wirkprinzipien dieser Art werden als mechanisch-magnetische Umformungsprinzipien bezeichnet. Allgemein wird sich das auf das ferromagnetische Wellenmaterial aufgebrachte Erregerfeld für den mechanisch unbelasteten und den mechanisch belasteten Spannungszustand der Welle in Amplitude und Phase unterschiedlich verteilen. Allgemein ist also das Sekundär-Magnetfeld auch abhängig von der Torsion bzw. dem Drehmoment der Welle, wobei sich das Sekundär-Magnetfeld dem Erregerfeld überlagert und dieses somit in Abhängigkeit von der Torsion bzw. dem Drehmoment in Amplitude und/oder Phase ändert.

Des Weiteren verändert sich die magnetische Wechselwirkung zwischen dem Erregerfeld und dem ferromagnetischen Material z.B. mit der Positionierung der Messvorrichtung relativ zu der Welle, z.B. mit dem Abstand zwischen der Messvorrichtung und der Welle.

Aus der Überlagerung des Primär-Feldes mit dem Sekundär-Feld resultiert ein Gesamt-Magnetfeld, das mittels der Magnetfelddetektoren der Messvorrichtung erfasst werden kann. Das Gesamt-Magnetfeld unterscheidet sich aufgrund der Wechselwirkung mit dem ferromagnetischen Wellenmaterial in Amplitude und/oder Phase von dem Primär-Magnetfeld. Mittels eines Vergleichs des Primär-Magnetfeldes mit dem Gesamt-Magnetfeld können somit Rückschlüsse auf den Torsionszustand, den Rotationszustand und die Positionierung der Welle gezogen werden, insbesondere Rückschlüsse auf die Rotationsgeschwindigkeit und die Torsion der Welle, das an der Welle anliegende Drehmoment, und den Abstand zwischen der Welle und der Messvorrichtung. Effektiv rühren die zu messenden Effekte oder Wirkungen aus einer Kennzahl des Systems her, welche sich als Produkt aus den Beiträgen wie magnetischer Permeabilität, elektrische Leitfähigkeit und Geschwindigkeit des Messobjektes zusammensetzt. Die Kennzahl wird in der Magneto-Dynamik als "Magnetische Reynoldszahl" bezeichnet.

Das Erregerfeld wird somit von der zu charakterisierenden Welle modifiziert, wobei von dem modifizierten Magnetfeld (d.h. dem resultierenden Gesamt-Magnetfeld) an jedem der Magnetfelddetektoren ein elektrisches Ausgangssignal hervorgerufen wird, insbesondere an dem ersten Magnetfelddetektor ein erstes elektrisches Ausgangssignal und an dem zweiten Magnetfelddetektor ein zweites elektrisches Ausgangssignal. Bei Ausgestaltung der Messvorrichtung mit vier Magnetfelddetektoren wird zudem an dem dritten Magnetfelddetektor ein drittes Ausgangssignal und an dem vierten Magnetfelddetektor ein viertes Ausgangssignal hervorgerufen.

Die Messvorrichtung ist (z.B. mittels einer dafür ausgebildeten Auswertevorrichtung) zum Erfassen der amplitudenmäßigen und/oder phasenmäßigen Differenz zwischen dem Erregersignal und dem ersten Ausgangssignal als erste Messgröße und zwischen dem Erregersignal und dem zweiten Ausgangssignal als zweite Messgröße ausgebildet. Es kann z.B. vorgesehen sein, dass die Messvorrichtung zum Erfassen des Erregersignals, des ersten Ausgangssignals und des zweiten Ausgangssignals sowie zum Ermitteln der ersten und der zweiten Messgröße basierend auf den erfassten Signalen ausgebildet ist.

Die Messvorrichtung kann also zum Erfassen der Differenz zwischen der Amplitude des Erregersignals und der Amplitude des ersten Ausgangssignals als erste Messgröße und zum Erfassen der Differenz zwischen der Amplitude des Erregersignals und der Amplitude des zweiten Ausgangssignals als zweite Messgröße ausgebildet sein, wobei die erste und die zweite Messgröße durch eine Amplitudendifferenz gegeben sind. Alternativ oder zusätzlich dazu kann die Messvorrichtung zum Erfassen der Differenz zwischen der Phase des Erregersignals und der Phase des ersten Ausgangssignals als erste Messgröße und zum Erfassen der Differenz zwischen der Phase des Erregersignals und der Phase des zweiten Ausgangssignals als zweite Messgröße ausgebildet sein, wobei die erste und die zweite Messgröße durch eine Phasendifferenz gegeben sind.

Falls ein Stromsignal als Erregersignal fungiert, sind das erste und das zweite Ausgangssignal bevorzugt ebenfalls Stromsignale. Falls ein Spannungssignal als Erregersignal fungiert, sind das erste und das zweite Ausgangssignal bevorzugt ebenfalls Spannungssignale. Es kann jedoch auch vorgesehen sein - insbesondere für den Fall, dass als erste und zweite Messgröße Phasendifferenzen erfasst werden - dass das Erregersignal ein Stromsignal ist und die Ausgangssignale Spannungssignale sind, oder dass das Erregersignal ein Spannungssignal ist und die Ausgangssignale Stromsignale sind.

Mittels der Messvorrichtung wird somit als erster Kanal die amplituden- oder phasenmäßige Differenz zwischen dem Erregersignal und dem ersten Ausgangssignal und als zweiter Kanal die amplituden- oder phasenmäßige Differenz zwischen dem Erregersignal und dem zweiten Ausgangssignal erfasst. Die Messvorrichtung kann somit z.B. zum Durchführen einer zweikanaligen Messung ausgebildet sein, wobei die beiden Signalkanäle die erste und die zweite Messgröße liefern.

Die Messvorrichtung ist zudem zum Ermitteln der Summe aus der ersten und der zweiten Messgröße und/oder zum Ermitteln der Differenz zwischen der ersten und der zweiten Messgröße ausgebildet. Mittels der Summe und der Differenz der ersten und der zweiten Messgröße können aufgrund der oben erläuterten Wechselwirkungen des Erregerfeldes mit der Welle Rückschlüsse auf den Torsionszustand, den Rotationszustand und die Positionierung der zu charakterisierenden Welle gezogen werden, z.B. das an der Welle anliegende Drehmoment, die Rotationsgeschwindigkeit der Welle, und der Abstand zwischen der Messvorrichtung und der Welle ermittelt werden.

Indem die Messvorrichtung zur Magnetfelderzeugung und Magnetfelderfassung lediglich einen zwischen Magnetfelddetektoren angeordneten Magnetfelderzeuger benötigt, wobei z.B. alle zur Magnetfelderzeugung und -erfassung dienenden Elemente in einem gemeinsamen Sensorelement bzw. Messkopf zusammengefasst sein können, ist ein unkomplizierter und kompakter Aufbau der Messvorrichtung ermöglicht. Aufgrund der Anordnungsgeometrie des Magnetfelderzeugers und der Magnetfelddetektoren können alle diese Elemente auf ein und derselben Seite der zu charakterisierenden Welle angeordnet werden (z.B. indem das Sensorelement an einer Seite der Welle angeordnet wird), wodurch die Messvorrichtung vielseitig einsetzbar und bei geringem Platzbedarf unproblematisch auch an bestehenden Anlagen bzw. Wellen nachrüstbar ist. Indem die Messvorrichtung zur Charakterisierung von Vollwellen, Hohlwellen und ferromagnetisch beschichteten Wellen geeignet ist, ist eine vielseitige Anwendbarkeit zusätzlich unterstützt. Indem mittels der Messvorrichtung mittels Bildung der Summe und der Differenz der erfassten Messgrößen unterschiedliche Rotations- und Lageparameter ermittelt werden können, ist ein gleichzeitiges Erfassen mehrerer der genannten Parameter in Echtzeit ermöglicht. Zudem ist mittels der Messvorrichtung und des zu Grunde liegenden Messverfahrens eine Überwindung der bisher ungelösten Problematik von materialspezifischen Hystereseeffekten, sowie der Begrenzung von Drift und Störeinflüssen im statischen und dynamischen Betrieb ermöglicht.

Gemäß einer Ausführungsform ist die Messvorrichtung zum Ermitteln der Differenz zwischen der ersten und der zweiten Messgröße und zum Ermitteln der Rotationsgeschwindigkeit der Welle basierend auf der Differenz ausgebildet.

Alternativ oder zusätzlich dazu kann die Messvorrichtung zum Ermitteln der Summe aus der ersten und der zweiten Messgröße und zum Ermitteln der Torsion der Welle (z.B. zum Ermitteln des an der Welle anliegenden Torsionsmoments bzw. Drehmoments) basierend auf der Summe ausgebildet sein.

Alternativ oder zusätzlich dazu kann die Messvorrichtung basierend auf der ersten und/oder der zweiten Messgröße zum Charakterisieren der Positionierung der Messvorrichtung relativ zu der Welle ausgebildet sein, z.B. zum Ermitteln des Abstandes zwischen dem Magnetfelderzeuger bzw. Sensorelement und der Welle.

Bei Ausgestaltung der Messvorrichtung mit vier Magnetfelddetektoren kann die Messvorrichtung (z.B. mittels der Auswertevorrichtung) zum Erfassen der amplitudenmäßigen oder phasenmäßigen Differenz zwischen dem Erregersignal und dem dritten Ausgangssignal als dritte Messgröße und/oder zwischen dem Erregersignal und dem vierten Ausgangssignal als vierte Messgröße ausgebildet sein. Es kann z.B. vorgesehen sein, dass die Messvorrichtung zum Erfassen des Erregersignals, des dritten Ausgangssignals und des vierten Ausgangssignals sowie zum Ermitteln der dritten und der vierten Messgröße basierend auf den erfassten Signalen ausgebildet ist.

Die Messvorrichtung kann also zum Erfassen der Differenz zwischen der Amplitude des Erregersignals und der Amplitude des dritten Ausgangssignals als dritte Messgröße und zum Erfassen der Differenz zwischen der Amplitude des Erregersignals und der Amplitude des vierten Ausgangssignals als vierte Messgröße ausgebildet sein, wobei die dritte und die vierte Messgröße durch eine Amplitudendifferenz gegeben sind. Alternativ oder zusätzlich dazu kann die Messvorrichtung zum Erfassen der Differenz zwischen der Phase des Erregersignals und der Phase des dritten Ausgangssignals als dritte Messgröße und zum Erfassen der Differenz zwischen der Phase des Erregersignals und der Phase des vierten Ausgangssignals als vierte Messgröße ausgebildet sein, wobei die dritte und die vierte Messgröße durch eine Phasendifferenz gegeben sind.

Falls ein Stromsignal als Erregersignal fungiert, sind das dritte und das vierte Ausgangssignal bevorzugt ebenfalls Stromsignale. Falls ein Spannungssignal als Erregersignal fungiert, sind das dritte und das vierte Ausgangssignal bevorzugt ebenfalls Spannungssignale. Es kann jedoch auch vorgesehen sein - insbesondere für den Fall dass als dritte und vierte Messgröße Phasendifferenzen erfasst werden - dass das Erregersignal ein Stromsignal ist und die Ausgangssignale Spannungssignale sind, oder dass das Erregersignal ein Spannungssignal ist und die Ausgangssignale Stromsignale sind.

Die Messvorrichtung kann zudem zum Ermitteln der Summe aus der dritten und der vierten Messgröße ausgebildet sein. Es kann vorgesehen sein, dass die Messvorrichtung basierend auf der Summe aus der ersten und der zweiten Messgröße sowie auf der Summe aus der dritten und der vierten Messgröße zum Ermitteln des Abstandes zwischen dem Magnetfelderzeuger bzw. dem Sensorelement und der Welle und/oder zum Ermitteln der Torsion der Welle ausgebildet ist. Es kann somit vorgesehen sein, dass von der Messvorrichtung die Summe aus der dritten und der vierten Messgröße als dritter Kanal erfasst wird. Die Messvorrichtung kann somit z.B. zum Durchführen einer dreikanaligen Messung ausgebildet sein, wobei der erste Signalkanal durch die erste Messgröße, der zweite Signalkanal durch die zweite Messgröße, und der dritte Signalkanal durch die Summe aus der dritten und der vierten Messgröße gegeben ist.

Alternativ oder zusätzlich dazu kann die Messvorrichtung zum Ermitteln der Differenz zwischen der dritten und der vierten Messgröße ausgebildet sein.

Gemäß einer Ausführungsform weist die Messvorrichtung eine Flussleitstruktur (z.B. ausgeführt als Flussleiteisen) auf, wobei der Magnetfelderzeuger und jeder der Magnetfelddetektoren auf einem separaten Pol der Flussleitstruktur angeordnet sind. Bei Ausgestaltung des Magnetfelderzeugers und/oder der Magnetfelddetektoren als Spulen kann z.B. vorgesehen sein, dass die jeweilige Spule um den zugehörigen Pol herum gewickelt ist bzw. der Pol in den Spulen-Innenraum hineinragt, sodass der Pol als Spulenkern der Spule fungiert. Die Flussleitstruktur kann Bestandteil des Sensorelements sein. Die Flussleitstruktur dient zum Bündeln und Führen des magnetischen Flusses.

Bei Ausgestaltung der Messvorrichtung mit lediglich zwei Magnetfelddetektoren kann die Flussleitstruktur z.B. E-förmig mit drei Polen und einem die Pole an deren Basis verbindenden Verbindungssteg ausgebildet sein, wobei der Magnetfelderzeuger auf dem mittleren Pol angeordnet ist, der erste Magnetfelddetektor auf einem der beiden äußeren Pole angeordnet ist, und der zweite Magnetfelddetektor auf dem anderen der beiden Pole angeordnet ist. Bei Ausgestaltung der Messvorrichtung mit vier Magnetfelddetektoren kann die Flussleitstruktur z.B. mit einer kreuzförmigen Basis mit vier (bevorzugt gleich langen) Kreuzarmen ausgebildet sein, wobei an dem Kreuzungspunkt und an jedem der vier Endpunkte der kreuzförmigen Basis ein im rechten Winkel von der Basis abgehender Pol angeordnet ist.

Mittels der Flussleitstruktur kann die magnetische Kopplung zwischen dem Magnetfelderzeuger, der Welle und den Magnetfelddetektoren verbessert werden, wodurch z.B. die Signalqualität verbessert werden kann und ein geringerer Abstand zwischen dem Sensor und dem Messobjekt (Welle) ermöglicht werden kann. Bei einer durch das Messobjekt (Welle) vorgehaltenen hohen magnetischen Permeabilität und somit sich einstellender hoher Kopplung zwischen dem Magnetfelderzeuger und den Magnetfelddetektoren kann wahlweise auf eine gesonderte magnetische Flussführung durch Kernmaterialien bzw. eine Flussleitstruktur verzichtet werden.

Die Flussleitstruktur kann z.B. aus geblechten Kernmaterialien (z.B. Trafokernblechen), pulvermetallurgischen Kernmaterialien (z.B. Pulverkerne geringer Korngröße), amorphen Kernmaterialien (z.B. laminierte oder bandausgeführte hochpermeable Metalle) oder fluiden Kernmaterialien (z.B. Ferrofluiden) ausgeführt sein. Die Leitung des Magnetfeldes durch die Flussleitstruktur behindert die Ausbildung von Streufeldern und begünstigt das Verhältnis von Messmagnetfeld zu Streumagnetfeld (d.h. das Verhältnis des von dem Magnetfelderzeuger erzeugten Magnetfeldes zu dem an den Magnetfelddetektoren anliegendem Magnetfeld). Darüber hinaus begünstigt die hochpermeable Flussleitstruktur die gezielte und lokale Einprägung des Magnetfeldes im Messobjekt und ermöglicht gegenüber der Anordnung ohne Flussleitstruktur (z.B. in Form einer Luftspulenanordnung) die Realisierung größerer Abstände zwischen dem Sensor (Flussleitstruktur, Magnetfelderzeuger und Magnetfelddetektoren, z.B. in Form von Spulen) und dem Messobjekt (Welle).

Die von der Messvorrichtung gelieferten Messergebnisse können temperaturabhängig sein, z.B. aufgrund einer Temperaturabhängigkeit der Eigenschaften der Welle (insbesondere des ferromagnetischen Wellenmaterials) und/oder einer Temperaturabhängigkeit der Eigenschaften der Flussleitstruktur. Diese Temperaturabhängigkeit kann z.B. zu einem thermischen Drift führen, der die erste, zweite, dritte und vierte Messgröße beeinflusst, sodass die Genauigkeit der Messergebnisse durch Korrektur einer derartigen Temperabhängigkeit verbessert werden kann. Alternativ dazu kann die Messgenauigkeit durch Verhindern eines derartigen Temperaturdrifts verbessert werden.

Die magnetische Reynoldszahl und der Wechselwirkungsparameter können jeweils sowohl von der temperaturabhängigen elektrischen Leitfähigkeit als auch von der temperaturabhängigen relativen Permeabilität des Messobjektes (der Welle) abhängen. Eine Veränderung der Temperatur (z.B. der Wellentemperatur) kann daher zu einem thermisch induzierten Drift des Messsystems durch das Messobjekt führen. Auch der Sensor ohne Messobjekt kann je nach technischer Ausführungsform einen thermisch bedingten Drift aufweisen. Die Verwendung einer hoch permeablen Flussleitstruktur kann z.B. durch ihre temperaturabhängige elektrische wie auch magnetische Leitfähigkeit einen Sensordrift verursachen.

Gemäß einer Ausführungsform weist die Messvorrichtung eine Flussleitstruktur und eine Temperiervorrichtung zum Temperieren der Flussleitstruktur auf eine vorgegebene Temperatur auf. Mittels der Temperiervorrichtung kann somit die Temperatur der Flussleitstruktur auf einen vorgegebenen konstanten Wert eingestellt und auf diesem Wert gehalten werden. Dadurch kann ein Temperaturdrift der Messergebnisse, der durch die Temperaturabhängigkeit der Materialeigenschaften der Flussleitstruktur bedingt ist, unterbunden werden. Die Temperiereinrichtung kann z.B. eine Heizvorrichtung und/oder eine Kühlvorrichtung aufweisen.

Gemäß einer weiteren Ausführungsform weist die Messvorrichtung einen Temperatursensor zum Erfassen der Temperatur auf. Der Temperatursensor kann z.B. derart ausgebildet und angeordnet sein (z.B. an dem Sensorelement), dass von ihm die in der Umgebung der Messvorrichtung vorliegende Umgebungstemperatur erfasst wird. Bei Ausbildung der Messvorrichtung mit einer Flussleitstruktur ist der Temperatursensor bevorzugt derart ausgebildet und angeordnet (z.B. im physischen Kontakt mit der Flussleitstruktur), dass von ihm die Temperatur der Flussleitstruktur erfasst wird. Die Temperatur der Flussleitstruktur wird auch als Kerntemperatur bezeichnet. Es kann vorgesehen sein, dass die Messvorrichtung zum Ermitteln eines Korrekturparameters in Abhängigkeit von der mittels des Temperatursensors erfassten Temperatur und zum Charakterisieren der Torsion, der Rotation und/oder der Positionierung der Welle unter Einbeziehung des Korrekturparameters ausgebildet ist. Es kann insbesondere vorgesehen sein, dass die Messvorrichtung zum Ermitteln der Summe aus der ersten und der zweiten Messgröße und zum Ermitteln der Torsion der Welle (z.B. zum Ermitteln des an der Welle anliegenden Torsionsmoments bzw. Drehmoments) basierend auf der Summe und dem Korrekturparameter ausgebildet ist.

Gemäß einer weiteren Ausführungsform ist die Messvorrichtung zum Beaufschlagen des Magnetfelderzeugers mit mehreren (d.h. zwei oder mehr) zeitlich periodisch variierenden Erregersignalen mit unterschiedlichen Frequenzen ausgebildet. Die Messvorrichtung kann z.B. derart ausgebildet sein, dass von ihr beim Betreiben der Messvorrichtung der Magnetfelderzeuger gleichzeitig mit unterschiedlichen Erregersignalen beaufschlagt wird, wobei jedes der Erregersignale eine andere Frequenz aufweist, und wobei die Erregersignale bevorzugt untereinander synchronisiert sind (d.h. jedes der Erregersignale gegenüber jedem der übrigen Erregersignale mit einer fixen Phasenverschiebung versehen ist). Als ein anderes Beispiel kann die Messvorrichtung derart ausgebildet sein, dass von ihr beim Betreiben der Messvorrichtung der Magnetfelderzeuger aufeinanderfolgend mit unterschiedlichen Erregersignalen beaufschlagt wird, wobei jedes der Erregersignale eine andere Frequenz aufweist. Die Messvorrichtung kann insbesondere zum Erfassen der ersten und/oder der zweiten und/oder der dritten und/oder der vierten Messgröße für jede der Frequenzen ausgebildet sein. Es kann insbesondere vorgesehen sein, dass die Messvorrichtung zum Erfassen der ersten und der zweiten Messgröße für jede der Frequenzen, zum Ermitteln der Summe aus der ersten und der zweiten Messgröße für jede der Frequenzen, und zum Ermitteln der Torsion der Welle (z.B. zum Ermitteln des an der Welle anliegenden Torsionsmoments bzw. Drehmoments) basierend auf den mehreren Summen ausgebildet ist.

Gemäß einer Ausführungsform ist die Messvorrichtung zum (entweder gleichzeitigen oder sequentiellen bzw. zeitlich aufeinanderfolgenden) Beaufschlagen des Magnetfelderzeugers mit einem ersten Erregersignal mit einer ersten Frequenz und einem zweiten Erregersignal mit einer zweiten Frequenz ausgebildet. Gemäß dieser Ausführung ist die Messvorrichtung zudem zum Erfassen der für die erste Frequenz vorliegenden ersten und zweiten Messgröße sowie zum Ermitteln der für die erste Frequenz vorliegenden Summe aus der ersten und der zweiten Messgröße als erste Summe ausgebildet. Des Weiteren ist die Messvorrichtung zum Erfassen der für die zweite Frequenz vorliegenden ersten und zweiten Messgröße sowie zum Ermitteln der für die zweite Frequenz vorliegenden Summe aus der ersten und der zweiten Messgröße als zweite Summe ausgebildet. Gemäß dieser Ausführung ist die Messvorrichtung zudem zum Ermitteln der Torsion der Welle (z.B. zum Ermitteln des an der Welle anliegenden Torsionsmoments bzw. Drehmoments) basierend auf der ersten und der zweiten Summe ausgebildet.

Die Temperaturabhängigkeit der ersten, zweiten, dritten und vierten Messgröße ist frequenzabhängig. Daher kann mittels Erfassens der jeweiligen Messgrößen für unterschiedliche Frequenzen eine temperaturbedingte Abweichung bzw. Verfälschung der Messergebnisse ermittelt und kompensiert werden, z.B. mittels einer systeminvarianten Übertragungsfunktion $G(\Omega_i)$, welche z.B. rechnerisch oder experimentell für die Messvorrichtung ermittelt werden kann (dabei bezeichnen G die Übertragungsfunktion und $\Omega_i$ mit i = 1 bis n die unterschiedlichen Frequenzen der Erregersignale). Dabei können sowohl durch die Messvorrichtung (z.B. die Flussleitstruktur) als auch durch die Welle bedingte Abweichungen kompensiert werden.

Gemäß einem weiteren Aspekt der Erfindung wird eine Anordnung zum Charakterisieren des Torsionszustandes und/oder des Rotationszustandes und/oder der Positionierung einer Welle bereitgestellt, wobei die Anordnung im Folgenden auch als Messanordnung bezeichnet wird. Die Anordnung weist die zu charakterisierende Welle und die Messvorrichtung auf.

Beim Betreiben der Messvorrichtung sind der Magnetfelderzeuger und die Magnetfelddetektoren der Messvorrichtung neben der zu charakterisierenden Welle angeordnet, z.B. indem das Sensorelement der Messvorrichtung neben der Welle angeordnet ist. Die zu charakterisierende Welle weist eine Wellenlängsachse auf. Die Positionierung des Magnetfelderzeugers und der Magnetfelddetektoren relativ zu der Welle wird nachfolgend anhand einer Radialebene der Welle beschrieben, wobei unter einer Radialebene eine Ebene verstanden wird, die von der Wellenlängsachse und einem Radius der Welle aufgespannt wird.

Der Magnetfelderzeuger ist derart neben der Welle angeordnet, dass er von einer Radialebene der Welle geschnitten wird bzw. in dieser Radialebene liegt, wobei diese Radialebene nachfolgend auch als Erreger-Radialebene oder Erregerebene bezeichnet wird (da sie die Radialebene kennzeichnet, in welcher der als Erreger fungierende Magnetfelderzeuger angeordnet ist). Die Radialrichtung, von der die Erreger-Radialebene (zusammen mit der Richtung der Wellenlängsachse) aufgespannt wird, wird auch als Erregerebenen-Radialrichtung bezeichnet.

Der Magnetfelderzeuger ist bevorzugt derart ausgebildet und angeordnet, dass das von ihm erzeugte Magnetfeld symmetrisch bezüglich der Erreger-Radialebene ist. Der Magnetfelderzeuger kann z.B. derart ausgebildet und angeordnet sein, dass das von ihm erzeugte Magnetfeld rotationssymmetrisch bezüglich der Erregerebenen-Radialrichtung ist.

Bei Ausgestaltung des Magnetfelderzeugers als Erregerspule und/oder der Magnetfelddetektoren als Empfängerspulen können diese z.B. derart angeordnet sein, dass ihre Spulenachsen parallel zu der Erregerebenen-Radialrichtung sind. Die Erregerspule ist bevorzugt derart angeordnet, dass die Erregerspulen-Achse senkrecht zu der Wellenlängsachse ist und (in ihrer Verlängerung) die Wellenlängsachse schneidet. Falls darüber hinaus zudem die Magnetfelddetektoren als Empfängerspulen ausgebildet sind, sind die Empfängerspulen bevorzugt derart angeordnet, dass ihre Empfängerspulen-Achsen parallel zu der Erregerspulen-Achse sind.

Der erste und der zweite Magnetfelddetektor sind derart neben der Welle angeordnet, dass der erste Magnetfelddetektor auf einer Seite der Erreger-Radialebene angeordnet ist, und dass der zweite Magnetfelddetektor auf der anderen Seite der Erreger-Radialebene angeordnet ist. Der erste Magnetfelddetektor und der zweite Magnetfelddetektor sind somit auf unterschiedlichen Seiten der Erreger-Radialebene angeordnet. Mit anderen Worten ausgedrückt, ist - bezüglich der Normalenrichtung der Erreger-Radialebene als Höhenrichtung - der Magnetfelderzeuger auf Höhe der Erreger-Radialebene angeordnet, einer der beiden Magnetfelddetektoren (z.B. der erste Magnetfelddetektor) oberhalb der Erreger-Radialebene angeordnet, und der andere der beiden Magnetfelddetektoren (z.B. der zweite Magnetfelddetektor) unterhalb der Erreger-Radialebene angeordnet. Der erste und der zweite Magnetfelddetektor sind also insbesondere derart angeordnet, dass die Sensor-Hauptachse nicht parallel zu der Wellenlängsachse ist, bzw. dass der erste und der zweite Magnetfelddetektor nicht in der Erreger-Radialebene angeordnet sind (d.h. nicht von der Erreger-Radialebene geschnitten werden).

Bei Ausgestaltung der Messvorrichtung mit vier Magnetfelddetektoren kann vorgesehen sein, dass der dritte und der vierte Magnetfelddetektor bezüglich der durch den Magnetfelderzeuger verlaufenden Erreger-Radialebene derart angeordnet sind, dass die Erreger-Radialebene durch den dritten und den vierten Magnetfelddetektor verläuft.

Alternativ dazu kann bei Ausgestaltung der Messvorrichtung mit vier Magnetfelddetektoren vorgesehen sein, dass der dritte und der vierte Magnetfelddetektor bezüglich der durch den Magnetfelderzeuger verlaufenden Erreger-Radialebene derart angeordnet sind, dass der dritte Magnetfelddetektor auf derselben Seite der Erreger-Radialebene angeordnet ist wie der erste Magnetfelddetektor, und dass der vierte Magnetfelddetektor auf derselben Seite der Erreger-Radialebene angeordnet ist wie der zweite Magnetfelddetektor. Gemäß dieser Ausführungsform sind also auch der dritte und der vierte Magnetfelddetektor derart angeordnet, dass sie nicht von der Erreger-Radialebene geschnitten werden.

Der erste und der zweite Magnetfelddetektor sind bevorzugt derart angeordnet, dass die Sensor-Hauptachse (die von dem ersten zu dem zweiten Magnetfelddetektor verläuft) senkrecht zu der Erregerebenen-Radialrichtung ist. Bei Ausgestaltung der Messvorrichtung mit vier Magnetfelddetektoren können zudem der dritte und der vierte Magnetfelddetektor derart angeordnet sein, dass die Sensor-Nebenachse (die von dem dritten zu dem vierten Magnetfelddetektor verläuft) senkrecht zu der Erregerebenen-Radialrichtung ist. Allgemein kann vorgesehen sein, dass alle Magnetfelddetektoren der Messvorrichtung in einer gemeinsamen Ebene angeordnet sind, die senkrecht zu der Erregerebenen-Radialrichtung ist.

Gemäß einer Ausführungsform sind der erste und der zweite Magnetfelddetektor derart angeordnet, dass die Sensor-Hauptachse senkrecht zu der Erreger-Radialebene ist, sodass die Sensor-Hauptachse senkrecht zu der Wellenlängsachse verläuft (d.h. zwischen den Richtungsvektoren der Sensor-Hauptachse und der Wellenlängsachse ein Winkel von 90° vorliegt). Dadurch ist eine symmetrische Anordnung des ersten und des zweiten Magnetfelddetektors bezüglich der Welle ermöglicht. Gemäß dieser Ausführung können bei Ausgestaltung der Messvorrichtung mit vier Magnetfelddetektoren zudem der dritte und der vierte Magnetfelddetektor z.B. derart angeordnet sein, dass die Sensor-Nebenachse senkrecht zu der Sensor-Hauptachse und senkrecht zu der Erregerebenen-Radialrichtung ist, sodass die Sensor-Nebenachse innerhalb der Erreger-Radialebene liegt (sodass bezüglich der Normalenrichtung der Erreger-Radialebene als Höhenrichtung der dritte und der vierte Magnetfelddetektor auf Höhe der Erreger-Radialebene angeordnet sind).

Gemäß einer anderen Ausführungsform sind der erste und der zweite Magnetfelddetektor derart angeordnet, dass die Sensor-Hauptachse senkrecht zu der Erregerebenen-Radialrichtung ist und einen Winkel von 45° mit der Erreger-Radialebene bildet, sodass die Sensor-Hauptachse auch mit der Wellenlängsachse einen Winkel von 45° bildet (d.h. zwischen den Richtungsvektoren der Sensor-Hauptachse und der Wellenlängsachse ein Winkel von 45° vorliegt). Diese Ausrichtung der Sensor-Hauptachse ist besonders für die Ausgestaltung der Messvorrichtung mit vier Magnetfelddetektoren relevant (siehe unten). Gemäß dieser Ausführung können bei Ausgestaltung der Messvorrichtung mit vier Magnetfelddetektoren zudem der dritte und der vierte Magnetfelddetektor z.B. derart angeordnet sein, dass die Sensor-Nebenachse senkrecht zu der Sensor-Hauptachse und senkrecht zu der Erregerebenen-Radialrichtung ist, sodass auch die Sensor-Nebenachse einen Winkel von 45° mit der Erreger-Radialebene bildet.

Der Magnetfelderzeuger und alle Magnetfelddetektoren der Messvorrichtung sind bevorzugt auf ein und derselben Seite der Welle angeordnet, z.B. indem das Sensorelement der Messvorrichtung seitlich neben der Welle angeordnet ist. Mit anderen Worten ausgedrückt, sind der Magnetfelderzeuger und alle Magnetfelddetektoren der Messvorrichtung bezüglich einer durch die Wellenlängsachse verlaufenden Ebene bevorzugt in ein und demselben Halbraum (d.h. auf ein und derselben Seite dieser Ebene) angeordnet. Durch eine derartige einseitige Anordnung der Messvorrichtung bezüglich der Welle kann die Messvorrichtung bei kleinem Raumbedarf variabel bezüglich der Welle positioniert werden. Insbesondere kann die Anordnung derart ausgebildet sein, dass die Welle nicht zwischen dem Magnetfelderzeuger und einem der Magnetfelddetektoren angeordnet ist. Dadurch kann die Messvorrichtung z.B. raumsparend mit kleinen Abmessungen ausgebildet sein.

Gemäß einer Ausführungsform sind der Magnetfelderzeuger und die Magnetfelddetektoren derart ausgebildet und angeordnet, dass der Abstand zwischen dem Magnetfelderzeuger und mindestens einem der Magnetfelddetektoren kleiner ist als der Durchmesser der zu charakterisierenden Welle. Die Messvorrichtung kann z.B. derart ausgebildet sein, dass der Abstand zwischen dem Magnetfelderzeuger und dem ersten Magnetfelddetektor und/oder der Abstand zwischen dem Magnetfelderzeuger und dem zweiten Magnetfelddetektor und/oder der Abstand zwischen dem Magnetfelderzeuger und dem dritten Magnetfelddetektor und/oder der Abstand zwischen dem Magnetfelderzeuger und dem vierten Magnetfelddetektor kleiner ist als der Durchmesser der zu charakterisierenden Welle. Dadurch ist bei kompakter Sensorausgestaltung eine hohe Messgenauigkeit zusätzlich unterstützt.

Bei Ausgestaltung des Magnetfelderzeugers und/oder der Magnetfelddetektoren als Spulen kann vorgesehen sein, dass die Spulen derart ausgebildet sind, dass der Querschnitt (Innenquerschnitt und/oder Außenquerschnitt) der Spulen kleiner ist als der Querschnitt der Welle, z.B. dass der Durchmesser (Innendurchmesser und/oder Außendurchmesser) der Spulen kleiner ist als der Durchmesser der Welle. Dadurch ist bei kompakter Sensorausgestaltung eine hohe Messgenauigkeit zusätzlich unterstützt.

Alternativ oder zusätzlich kann die Messvorrichtung derart ausgebildet sein, dass der Abstand zwischen dem ersten und dem zweiten Magnetfelddetektor kleiner ist als der Durchmesser der Welle. Zudem kann die Messvorrichtung derart ausgebildet sein, dass der Abstand zwischen dem dritten und dem vierten Magnetfelddetektor kleiner ist als der Durchmesser der Welle.

Für einige mögliche Applikationsfelder (Automotive, Spezialanwendungen) kann vorgesehen sein, dass das Sensorelement mit dem Magnetfelderzeuger und den Magentfelddetektoren in Planartechnologie aufgebaut ist, wobei der Magentfelderzeuger und/oder die Magentfelddetektoren z.B. in Form von Spulenwindungen entweder als 2D-Spulen auf einer Leiterplatte aufgebracht sein können oder als 3D-Spulen über Schichttechnologie aufgebaut sein können. Derartige Spulen können z.B. durch gedruckte oder gedampfte oder gesteckte hochpermeable Flussleitstrukturen durchsetzt sein.

Gemäß einem weiteren Aspekt der Erfindung wird ein Verfahren zum Charakterisieren bzw. Messen der Torsion und/oder der Rotation und/oder der Positionierung einer Welle bereitgestellt, wobei das Verfahren im Folgenden auch als Messverfahren bezeichnet wird. Die vorstehend mit Bezug auf die Messvorrichtung und die Messanordnung beschriebenen Merkmale gelten analog für das Messverfahren, sodass im Folgenden lediglich knapp auf die entsprechenden Ausgestaltungen des Messverfahrens eingegangen wird und im Übrigen hiermit auf die entsprechenden Erläuterungen hinsichtlich der Messvorrichtung und der Messanordnung verwiesen wird.

Gemäß dem Messverfahren wird ein die Welle zumindest teilweise durchsetzendes, zeitlich periodisch variierendes Magnetfeld (z.B. ein Magnetfeld mit einer zeitlich periodisch variierenden Feldstärke) erzeugt, indem ein Magnetfelderzeuger mit einem zeitlich periodisch variierenden elektrischen Erregersignal beaufschlagt wird, wobei das Magnetfeld die Welle zumindest partiell oder oberflächlich durchdringt.

Das Magnetfeld wird von der Welle unter Ausbildung eines Gesamt-Magnetfeldes modifiziert. In einem nächsten Verfahrensschritt erfolgt ein Erfassen der amplitudenmäßigen oder phasenmäßigen Differenz zwischen dem Erregersignal und einem ersten elektrischen Ausgangssignal, das die Stärke des modifizierten Magnetfeldes an einer ersten Position repräsentiert, als erste Messgröße und zwischen dem Erregersignal und einem zweiten elektrischen Ausgangssignal, das die Stärke des modifizierten Magnetfeldes an einer zweiten Position repräsentiert, als zweite Messgröße. Die erste und die zweite Position sind derart angeordnet, dass sie nicht in ein und derselben Radialebene der Welle liegen. In einem nächsten Verfahrensschritt wird die Summe aus der ersten und der zweiten Messgröße und/oder die Differenz zwischen der ersten und der zweiten Messgröße ermittelt.

Die Positionierung der ersten Position entspricht derjenigen des ersten Magnetfelddetektors, die Positionierung der zweiten Position entspricht derjenigen des zweiten Magnetfelddetektors. Bezüglich der Positionierung der ersten und der zweiten Position relativ zu dem Magnetfelderzeuger und relativ zu der Welle gelten daher die vorstehend mit Bezug auf die Positionierung des ersten bzw. zweiten Magnetfelddetektors erläuterten Merkmale analog.

Es kann insbesondere vorgesehen sein, dass der Magnetfelderzeuger zwischen der ersten und der zweiten Position angeordnet ist. Zudem kann vorgesehen sein, dass an der ersten Position ein erster Magnetfelddetektor und an der zweiten Position ein zweiter Magnetfelddetektor gemäß den vorstehenden Erläuterungen angeordnet sind, und dass das erste Ausgangssignal mittels des ersten Magnetfelddetektors und das zweite Ausgangssignal mittels des zweiten Ausgangsdetektors erfasst wird.

Der Magnetfelderzeuger kann z.B. wie vorstehend mit Bezug auf die Messvorrichtung und das Messverfahren erläutert ausgebildet und angeordnet sein.

Gemäß einer Ausführungsform beinhaltet das Messverfahren zudem das Erfassen der amplitudenmäßigen oder phasenmäßigen Differenz zwischen dem Erregersignal und einem dritten elektrischen Ausgangssignal, das die Stärke des modifizierten Magnetfeldes an einer dritten Position repräsentiert, als dritte Messgröße und zwischen dem Erregersignal und einem vierten elektrischen Ausgangssignal, das die Stärke des modifizierten Magnetfeldes an einer vierten Position repräsentiert, als vierte Messgröße. Gemäß dieser Ausführung erfolgt zudem ein Ermitteln der Summe aus der dritten und der vierten Messgröße und/oder ein Ermitteln der Differenz zwischen der dritten und der vierten Messgröße. Die Verbindungslinie zwischen der dritten und der vierten Position ist bevorzugt senkrecht zu der Verbindungslinie zwischen der ersten und der zweiten Position.

Die Positionierung der dritten Position entspricht derjenigen des dritten Magnetfelddetektors, die Positionierung der vierten Position entspricht derjenigen des vierten Magnetfelddetektors. Bezüglich der Positionierung der dritten und der vierten Position relativ zu dem Magnetfelderzeuger, relativ zu der Welle und relativ zu der ersten und zweiten Position gelten daher die vorstehend mit Bezug auf die Positionierung des dritten bzw. vierten Magnetfelddetektors erläuterten Merkmale analog.

Es kann insbesondere vorgesehen sein, dass der Magnetfelderzeuger zwischen der dritten und der vierten Position angeordnet ist. Zudem kann vorgesehen sein, das an der dritten Position ein dritter Magnetfelddetektor und an der vierten Position ein vierter Magnetfelddetektor gemäß den vorstehenden Erläuterungen angeordnet sind, und dass das dritte Ausgangssignal mittels des dritten Magnetfelddetektors und das vierte Ausgangssignal mittels des vierten Ausgangsdetektors erfasst wird.

Indem mittels des beschriebenen Funktionsprinzips unterschiedliche Betriebsparameter der Welle (Torsions-, Rotations- und Lageparameter) gleichzeitig erfasst werden können, kann eine Multifunktionssensoranordnung und -verfahren zur berührungslosen Bestimmung von Betriebsparamatern wie Rotationsgeschwindigkeit (Tangentialgeschwindigkeit oder Winkelgeschwindigkeit), wirksamem Drehmoment (Torsion), übertragener mechanischer Leistung, Wirkungsgrad sowie zur berührungslosen Lageanalyse an Antriebsteilen (insbesondere Wellen) mit ferromagnetischen Bestandteilen (z.B. an ferromagnetischen Antriebsteilen oder ferromagnetisch laminierten bzw. beschichteten Antriebsteilen) bereitgestellt werden. Mittels des beschriebenen Funktionsprinzips ist insbesondere eine Erfassung der Betriebsparameter in Echtzeit ermöglicht. Die Welle weist ferromagnetisches Material auf, z.B. Eisen, Stahl, Nickel, Nickellegierungen etc., und kann z.B. vollständig aus ferromagnetischem Material bestehen oder mit ferromagnetischem Material beschichtet sein. Die Welle kann z.B. eine CFK-Welle sein, die mit einer Schicht ferromagnetischen und elektrisch leitfähigen Materials beschichtet ist (wobei CFK kohlenstofffaserverstärkten Kunststoff bezeichnet). Auf Grund der berührungslosen Messung eignet sich die beschriebene Anordnung für spezielle Einsatzbedingungen (hohe Temperaturen, Schmier- und Abrasionsmittel) im Schwermaschinenbau, im Förder- und Transportwesen sowie im Allgemeinen zur Detektion genannter Parameter, wobei die Wellenoberfläche in keiner Weise behandelt oder beeinflusst werden muss. Durch die Einbeziehung des Aspektes der sicherheitsrelevanten Betriebszustandsüberwachung erweitert sich der Applikationsumfang dieser Technologie auf Anwendungen der beschriebenen Anordnung für die Ultravakuumanlagen oder Zentrifugentechnologie. Aufgrund der technischphysikalischen Zusammenhänge ist durch eine Miniaturisierung der funktionellen Einzelelemente eine Anwendung des Multifunktionssystems im Automotive-Sektor denkbar.

Ein Vorteil der beschriebenen Anordnung und des zu Grunde liegenden Messprinzips liegt in der Überwindung der bisher ungelösten Problematik von materialspezifischen Hystereseeffekten, sowie der Begrenzung von Drift und Störeinflüssen im statischen und dynamischen Betrieb. Das Basisprinzip des (Multifunktions-)Sensors ist elektromagnetischer Art und daher berührungsloser Art. Verglichen wird ein magnetisches Feld, welches dem ferromagnetischen Antriebselement aufgeprägt wird, mit einem empfangenen magnetischen Feld, welches sich aus dem aufgeprägten Feld und einem induzierten Magnetfeld zusammensetzt. Das empfangene Magnetfeld kann durch Einflussgrößen wie die Tangentialgeschwindigkeit der Welle, das wirkende Drehmoment (Torsion) oder die Lage des Messobjektes (Welle) moduliert bzw. variiert werden. Ein relativer Vergleich des aufgeprägten und des empfangenen Feldes offenbart in der Amplituden- und Phasenänderung die Wirkung genannter Parameter auf das Messobjekt. Mittels der Magnetfelddetektoren kann die drehmoment- bzw. drehzahlabhängige Amplitudenänderung oder Phasenverschiebung zwischen dem eingebrachten Erregersignal und den empfangenen Ausgangssignalen detektiert werden. Effektiv rühren die zu messenden Effekte oder Wirkungen aus einer Kennzahl des Systems her, welche sich als Produkt aus den Beiträgen wie, magnetischer Permeabilität, elektrischer Leitfähigkeit und Geschwindigkeit des Messobjektes zusammensetzt. Die Kennzahl hat in der Magneto-Dynamik den Namen "Magnetische Reynoldszahl". Die Geschwindigkeitsmessung beruht auf der Bewegung des leitfähigen Körpers in einem dem Messobjekt (Welle) extern aufgeprägten Magnetfeld, währenddessen die Torsionswirkung sich aus der Änderung der magnetischen Permeabilität des Messobjektes ergibt. Die magnetische Reynoldszahl $R_m$ wie auch der Wechselwirkungsparameter S hängen jeweils von der temperaturabhängigen elektrischen Leitfähigkeit als auch von der temperaturabhängigen relativen Permeabilität des Messobjektes (der Welle) ab. Die magnetische Reynoldszahl charakterisiert die Geschwindigkeitsmessung, der Wechselwirkungsparameter die Torsionsmessung. Aufgrund der Temperaturabhängigkeit der magnetischen Permeabilität und der elektrischen Leitfähigkeit kann eine Kompensation vorgesehen sein. Die Lageanalyse am Antriebselement (Welle) kann durch eine mit der Detektion von Wellengeschwindigkeit und Torsion gekoppelte Messung realisiert werden. Da der Radius des Antriebselementes bzw. der Welle bekannt ist, kann aus der Tangentialgeschwindigkeit die Winkelgeschwindigkeit berechnet werden. Nach erfolgter Trennung werden die einzelnen Beiträge der Änderungen im Amplituden-und Phasengang durch mathematisch-physikalische Zusammenhänge umgerechnet, sodass die Winkelgeschwindigkeit [ms$^{-1}$], die Torsion [Nm], die übertragene mechanische Leistung [Watt], der Wirkungsgrad und die Lage [m] in ihren originären Einheiten-und Maßsystemen dargestellt werden können.

Durch das beschriebene Funktionsprinzip werden somit unter anderem ein Verfahren und eine Anordnung zur berührungslosen Detektion der Parameter Torsion, Winkelgeschwindigkeit, übertragene mechanische Leistung, Wirkungsgrad und Lageanalyse eines Antriebselementes als Multifunktionsprinzip zur Verfügung gestellt. Die Bestimmung der übertragenen mechanischen Leistung am Messobjekt (Welle) ergibt sich als Produkt der ermittelten Winkelgeschwindigkeit und des wirksamen Drehmomentes. Der Wirkungsgrad einer Arbeitsmaschine wird berechnet aus dem Quotienten der abgegebenen Leistung zur aufgenommenen Leistung. Die relative Lagemessung zwischen Messobjekt (Welle) und dem Sensor ergibt sich aus der zeitlich hochaufgelösten Detektion der Amplitude oder der Phase anhand von $X_S$ und wird im weiteren Fortgang näher erläutert. Die relative Lagemessung entspricht einer induktiven Abstandsmessung. Eine Manipulation der Oberfläche oder Morphologie (Verjüngung, Strukturierung, OF-Schicht, Codierung) ist für Materialien mit ferromagnetischen Eigenschaften nicht notwendig. Für Antriebselemente ohne ferromagnetische Eigenschaften (z.B. CFK-Wellen) kann eine Beschichtung mit einem ferromagnetischen Material wie z.B. Nickel etc. im Bereich einiger Nanometer oder Mikrometer Dicke zur Applikationskonditionierung vorgesehen werden.

Das ferromagnetische Messobjekt (Welle) verändert die Kopplung des Magnetfelderzeugers und der Magnetfelddetektoren untereinander in Abhängigkeit von der Lage des Sensors (Abstand Sensor - Welle), der Rotationsgeschwindigkeit und schließlich der im Messobjekt wirkenden Kräfte (Torsion/Druck/Zug). Die Amplituden-und Phasenlagenverteilung des Magnetfeldes kann durch eine Lage-, Geschwindigkeits- oder Spannungsänderung (Torsion/Druck/Zug) im Material verändert werden. Ein relativer Vergleich des aufgeprägten und des empfangenen Feldes offenbart in der Amplituden- und Phasenänderung die Wirkung genannter Parameter auf das Messobjekt. Die Möglichkeit der voneinander getrennten Messung der Parameter Winkelgeschwindigkeit und Torsion lassen sich durch zwei dimensionslose für das Messsystem charakteristische Kennzahlen beschreiben. Zur berührungslosen Bestimmung der Winkelgeschwindigkeit der Welle ist die sogenannte magnetische Reynoldszahl $R_m$ ausschlaggebend von Bedeutung, währenddessen die Wirkung der Torsionsspannung auf das Messobjekt durch eine Veränderung des Wechselwirkungsparameters S beschrieben wird.

Das beschriebene Funktionsprinzip bezieht sich u.a. auf die Möglichkeit einer berührungslosen Detektion der Betriebsparameter, wie Torsion, Winkelgeschwindigkeit und Lage/Position der Welle. Neben der Detektion der genannten Parameter sind zudem folgende Ausgestaltungen möglich:

- Durch die separate Detektion von Winkelgeschwindigkeit und Torsion (Drehmoment) ist eine Darstellung der übertragenen mechanischen Leistung in Echtzeit möglich,
- Neben der Bestimmung der übertragenen mechanischen Leistung in Echtzeit ist eine Bestimmung des Maschinenwirkungsgrades möglich,
- Die Detektion der Winkelgeschwindigkeit ist Vorzeichen-orientiert, d.h. eine Bestimmung von Rechts- und Linkslauf ist durch das induktive Messverfahren ermöglicht,
- Eine temporär hoch aufgelöste Lagemessung ermöglicht eine kontaktlose Bestimmung von Vibrationen des Antriebselementes, und
- Für den Fall eines sehr langsamen Durchlaufes der Antriebswelle durch das Detektionsvolumen des Sensors kann eine kontaktlose Kontourmessung durchgeführt werden.

Die Erfindung wird nachfolgend anhand von Ausführungsbeispielen mit Bezugnahme auf die beiliegenden Figuren erläutert, wobei gleiche oder ähnliche Merkmale mit gleichen Bezugszeichen versehen sind, hierbei zeigen schematisch:

Figur 1A, 1 B eine Messanordnung gemäß einer Ausführungsform mit einer Messvorrichtung mit zwei Magnetfelddetektoren,

Figur 2 eine Messanordnung gemäß einer weiteren Ausführungsform mit einer Messvorrichtung mit vier Magnetfelddetektoren,

Figur 3 eine Messanordnung gemäß einer weiteren Ausführungsform mit einer Messvorrichtung mit vier Magnetfelddetektoren, und

Figur 4 eine Draufsicht einer kreuzförmigen Flussleitstruktur mit Spulen.

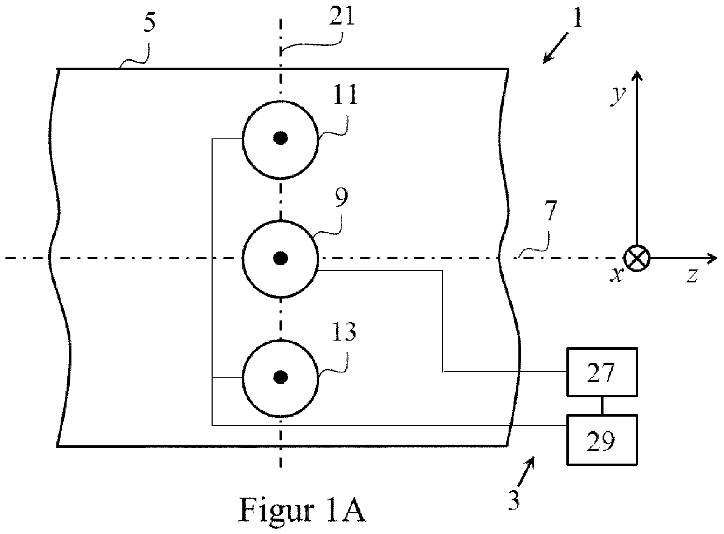

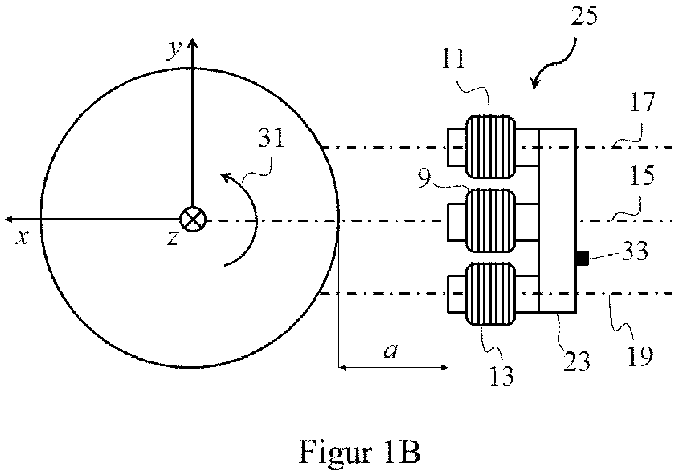

Die Figuren 1A und 1B zeigen eine Messanordnung 1 gemäß einer Ausführungsform beim Durchführen eines Messverfahrens gemäß einer Ausführungsform. Die Messanordnung 1 weist eine Messvorrichtung 3 und eine Welle 5 auf. Die Wellenlängsachse 7 fällt mit der z-Richtung des in den Figuren dargestellten xyz-Koordinatensystems zusammen. Die Welle 5 besteht zumindest teilweise aus ferromagnetischem und elektrisch leitfähigem Material. Als Beispiel ist bei der Ausführung nach den Figuren 1A und 1B die Welle 5 eine Hohl- oder Vollwelle, die aus einem ferromagnetischen und elektrisch leitfähigen Material besteht.

Die Messvorrichtung 3 weist einen Magnetfelderzeuger 9, einen ersten Magnetfelddetektor 11 und einen zweiten Magnetfelddetektor 13 auf. Der Magnetfelderzeuger 9 ist als Beispiel als eine Spule ausgeführt, die auch als Erregerspule 9 bezeichnet wird. Der Magnetfelderzeuger kann jedoch auch in Form einer anderen magnetfelderzeugenden Vorrichtung ausgebildet sein. Der erste 11 und der zweite 13 Magnetfelddetektor sind als Beispiel jeweils als eine Spule ausgeführt, die auch als erste Empfängerspule 11 und zweite Empfängerspule 13 bezeichnet werden. Der erste und der zweite Magnetfelddetektor können jedoch auch in Form eines anderen magnetfeldsensitiven Detektors ausgebildet sein, z.B. als Hall-Detektor. Die Erregerspule 9 ist zwischen der ersten Empfängerspule 11 und der zweiten Empfängerspule 13 angeordnet.

Die xz-Ebene des in den Figuren dargestellten xyz-Koordinatensystems bildet eine Radialebene der Welle 5. Die Erregerspule 9 ist derart angeordnet, dass sie von der xz-Ebene geschnitten wird bzw. in der xz-Ebene liegt, daher wird die durch die xz-Ebene gebildete Radialebene auch als Erreger-Radialebene bezeichnet. Die Erreger-Radialebene wird somit (zusammen mit der Wellenlängsachse) durch die x-Richtung als Erregerebenen-Radialrichtung aufgespannt. Die Erregerspule 9 ist derart angeordnet, dass ihre Spulenachse 15 parallel zu der x-Achse ist, wobei die Erregerspulen-Achse 15 senkrecht zu der Wellenlängsachse 7 ist und (in ihrer Verlängerung) die Wellenlängsachse 7 schneidet. Das von der Erregerspule 9 erzeugte Magnetfeld (nicht dargestellt) ist rotationssymmetrisch bezüglich der Erregerspulen-Achse 15.

Die erste Empfängerspule 11 ist auf einer Seite der Erreger-Radialebene angeordnet (nämlich auf der Seite der xz-Ebene mit positiven y-Werten), die zweite Empfängerspule 13 ist auf der anderen Seite der Erreger-Radialebene angeordnet (nämlich auf der Seite der xz-Ebene mit negativen y-Werten). Die erste 11 und zweite 13 Empfängerspule sind derart angeordnet, dass ihre Empfängerspulen-Achsen 17 bzw. 19 parallel zu der Erregerspulen-Achse 15 (und somit parallel zu der x-Achse bzw. der Erregerebenen-Radialrichtung) verlaufen, wobei die drei Spulenachsen 15, 17, 19 alle in einer Ebene verlaufen, die parallel zur xy-Ebene ist. Die Sensor-Hauptachse 21, welche durch die Verbindungslinie zwischen der ersten 11 und der zweiten 13 Empfängerspule gegeben ist, verläuft parallel zur y-Achse und senkrecht zu der Erreger-Radialebene (xz-Ebene). Zwischen dem Richtungsvektor der Wellenlängsachse 7 (z-Richtung) und dem Richtungsvektor der Sensor-Hauptachse 21 (y-Richtung) liegt somit ein Winkel von 90° vor.

Die Erregerspule 9 sowie die erste 11 und die zweite 13 Empfängerspule sind identisch zueinander ausgebildet. Die erste 11 und die zweite 13 Empfängerspule sind entlang der Sensor-Hauptachse 21 äquidistant symmetrisch beidseitig der Erregerspule 9 angeordnet. Die Erregerspule 9 ist somit mittig zwischen der ersten 11 und der zweiten 13 Empfängerspule angeordnet.

Die Messvorrichtung 3 kann optional eine Flussleitstruktur 23 aufweisen (in Figur 1A nicht dargestellt). Gemäß Figur 1B ist die Flussleitstruktur 23 E-förmig ausgebildet, wobei die Erregerspule 9 auf dem mittleren Pol der Flussleitstruktur 23 angeordnet ist und die beiden Empfängerspulen 11, 13 auf den beiden äußeren Polen der Flussleitstruktur 23 angeordnet sind. Die Erregerspule 9 und die Empfängerspulen 11, 13 (sowie optional die Flussleitstruktur 23) bilden ein Sensorelement 25 der Messvorrichtung. Während des Betriebs der Messvorrichtung 3 ist das Sensorelement 25 seitlich neben der Welle 1 angeordnet.

Der Abstand zwischen der Erregerspule 9 und der ersten Empfängerspule 11 ist kleiner als der Durchmesser der Welle 5. Auch der Abstand zwischen der Erregerspule 9 und der zweiten Empfängerspule 13 ist kleiner als der Durchmesser der Welle 5. Der Innenquerschnitt und der Außenquerschnitt jeder der Spulen 9, 11, 13 ist kleiner als der Querschnitt der Welle 5. Zudem ist der Abstand zwischen der ersten Empfängerspule 11 und der zweiten Empfängerspule 13 kleiner als der Durchmesser der Welle 5.

Die Messvorrichtung 3 weist eine elektrische Energiequelle 27 auf, die mit der Erregerspule 9 verbunden ist und mittels derer beim Betreiben der Messvorrichtung 3 die Erregerspule 9 mit einem zeitlich periodisch variierenden elektrischen Erregersignal beaufschlagt wird. Als Beispiel ist die Messvorrichtung 3 mittels der Energiequelle 27 zum Beaufschlagen der Erregerspule 9 mit einem harmonischen Wechselstrom einer vorgegebenen Frequenz ausgebildet, wobei der Wechselstrom als Erregersignal verwendet wird. Alternativ dazu kann die mit dem Wechselstrom einhergehende Wechselspannung als Erregersignal verwendet werden. Durch das Erregersignal wird von der Erregerspule 9 ein Magnetfeld erzeugt (nicht dargestellt), welches mit dem ferromagnetischen und elektrisch leitfähigen Material der Welle 5 wechselwirkt, wodurch ein modifiziertes Gesamt-Magnetfeld erzeugt wird.

Das modifizierte Gesamt-Magnetfeld induziert in jeder der Empfängerspulen 11, 13 eine Spannung, die mit einem elektrischen Strom einhergeht. Die Messvorrichtung 3 ist zum Erfassen des an der ersten Empfängerspule 11 resultierenden elektrischen Stroms als erstes Ausgangssignal und zum Erfassen des an der zweiten Empfängerspule 13 resultierenden Stroms als zweites Ausgangssignal ausgebildet. Alternativ dazu kann die Messvorrichtung 1 auch zum Erfassen der an der ersten Empfängerspule 11 resultierenden elektrischen Spannung als erstes Ausgangssignal und zum Erfassen der an der zweiten Empfängerspule 13 resultierenden Spannung als zweites Ausgangssignal ausgebildet sein. Die Messvorrichtung 3 weist als Beispiel eine Auswertevorrichtung 29 auf, die mit der ersten 11 und der zweiten 13 Empfängerspule verbunden und zum Erfassen der Ausgangssignale ausgebildet ist.

Die Auswertevorrichtung 29 ist mit der elektrischen Energiequelle 27 verbunden. Die Messvorrichtung 3 ist mittels der Auswertevorrichtung 29 zum Erfassen der amplitudenmäßigen und/oder phasenmäßigen Differenz zwischen dem Erregersignal und dem ersten Ausgangssignal als erste Messgröße und zwischen dem Erregersignal und dem zweiten Ausgangssignal als zweite Messgröße ausgebildet.

Die Messvorrichtung 3 ist mittels der Auswertevorrichtung 29 zum Ermitteln der Summe aus der ersten und der zweiten Messgröße ausgebildet. Die Messvorrichtung 3 ist zudem mittels der Auswertevorrichtung 29 zum Ermitteln der Differenz zwischen der ersten und der zweiten Messgröße ausgebildet. Zudem ist die Messvorrichtung 3 basierend auf der ermittelten Summe und der ermittelten Differenz zum Charakterisieren des Torsionszustandes, des Rotationszustandes und der Positionierung der Welle ausgebildet, wie nachfolgend erläutert.

Die erste Messgröße $X_{E/R1}$ und die zweite Messgröße $X_{E/R2}$ können wie folgt geschrieben werden:

$$X_{E/R1} = B_E - B_{R1} = X_S + X_R - X_T \qquad\qquad (1)$$

$$X_{E/R2} = B_E - B_{R2} = X_S - X_R - X_T, \qquad\qquad (2)$$

wobei mit dem Index E der Magnetfelderzeuger 9 (hier: die Erregerspule 9), mit dem Index R1 der erste Magnetfelddetektor 11 (hier: die erste Empfängerspule 11), mit dem Index R2 der zweite Magnetfelddetektor 13 (hier: die zweite Empfängerspule 13), mit $B_E$ die Bezugsgröße des Erregersignals, mit $B_{R1}$ die Bezugsgröße des ersten Ausgangssignals, und mit $B_{R2}$ die Bezugsgröße des zweiten Ausgangssignals bezeichnet ist, wobei die Bezugsgröße entweder die Amplitude oder die Phase des jeweiligen Signals ist.

Mit $X_{E/R1}$ ist die erste Messgröße bezeichnet, die der Differenz zwischen der Bezugsgröße des Erregersignals und der Bezugsgröße des ersten Ausgangssignals (also der Amplitudendifferenz oder der Phasendifferenz zwischen dem Erregersignal und dem ersten Ausgangssignal) entspricht. Mit $X_{E/R2}$ ist die zweite Messgröße bezeichnet, die der Differenz zwischen der Bezugsgröße des Erregersignals und der Bezugsgröße des zweiten Ausgangssignals (also der Amplitudendifferenz oder der Phasendifferenz zwischen dem Erregersignal und dem zweiten Ausgangssignal) entspricht. Die erste und die zweite Messgröße setzen sich jeweils zusammen aus einem statischen Beitrag $X_S$, der von dem Abstand a zwischen dem Magnetfelderzeuger 9 bzw. dem Sensorelement 25 und der Welle 5 abhängt, einem von der Rotationsgeschwindigkeit der Welle 5 abhängigen Beitrag $X_R$, und einem von der Torsion der Welle 5 abhängigen Beitrag $X_T$. Der erforderliche Abstand des Sensorelements zum Messobjekt (Welle) ist stark von der magnetischen Kopplung zwischen dem Sensorelement und dem Messobjekt (Welle) abhängig und bewegt sich typischerweise im Bereich von einigen Millimetern. In Abhängigkeit von der magnetischen Leitfähigkeit des Messobjektes muss ein geeigneter Messabstand a eingestellt werden. Je kleiner der Messabstand a gewählt werden kann, desto besser ist die Signalqualität und Dynamik, welche zu einer möglichst störungsfreien Messsignalanalyse erforderlich ist.

Bei der vorliegenden symmetrischen Anordnung des ersten 11 und des zweiten 13 Magnetfelddetektors bezüglich der Welle 5 ist der Beitrag $X_S$ auf beiden Kanälen gleich groß. Über den Beitrag $X_S$ kann somit sichergestellt werden, dass der erste 11 und der zweite 13 Magnetfelddetektor (bzw. das Sensorelement 25 der Messvorrichtung 3) symmetrisch bezüglich der Welle 5 angeordnet sind.

Eine Rotation der Welle 5 geht mit einer Vergrößerung der erfassten Bezugsgrößen-Differenz um einen von der Rotationsgeschwindigkeit abhängigen Beitrag $X_R$ auf einem der beiden Messkanäle und einer Verringerung der Bezugsgrößen-Differenz um denselben Beitrag $X_R$ auf dem anderen der beiden Kanäle einher. Für den Fall, dass an der dem Magnetfelderzeuger 9 zugewandten Seite der Welle 5 die Tangentialgeschwindigkeit der Welle von dem zweiten 13 zu dem ersten 11 Magnetfelddetektor hin weist (in Figur 1B veranschaulicht durch den Pfeil 31, der die zugehörige Rotationsrichtung anzeigt), ist $X_R$ positiv, wobei sich der erste Kanal bzw. die erste Messgröße $X_{E/R1}$ um den (rotationsgeschwindigkeitsabhängigen) Betrag $X_R$ vergrößert, und sich der zweite Kanal bzw. die zweite Messgröße $X_{E/R2}$ um denselben Betrag $X_R$ verringert. Für den Fall, dass an der dem Magnetfelderzeuger 9 zugewandten Seite der Welle 5 die Tangentialgeschwindigkeit der Welle von dem ersten 11 zu dem zweiten 13 Magnetfelddetektor hin weist (nicht dargestellt), ist $X_R$ positiv, wobei sich der erste Kanal bzw. die erste Messgröße $X_{E/R1}$ um den Betrag $X_R$ verringert, und sich der zweite Kanal bzw. die zweite Messgröße $X_{E/R2}$ um denselben Betrag $X_R$ vergrößert. Die Laufrichtung der Welle 5 bestimmt also das Vorzeichen, mit dem der Beitrag $X_R$ in die erste und die zweite Messgröße eingeht, wodurch das Ermitteln der Lauf- bzw. Drehrichtung der Welle 5 ermöglicht ist. Die Messvorrichtung 3 kann z.B. derart ausgebildet sein, dass es von ihr als Vorliegen einer ersten Drehrichtung gewertet wird, wenn die erste Messgröße größer ist als die zweite Messgröße, und dass es von ihr als Vorliegen einer zweiten Drehrichtung gewertet wird, wenn die zweite Messgröße größer ist als die erste Messgröße, wobei die erste Drehrichtung der zweiten Drehrichtung entgegengerichtet ist.

Eine Torsion der Welle 5, welche sowohl bei ruhender als auch bei rotierender Welle vorliegen kann, äußert sich in einer Veränderung der durch das Erreger-Magnetfeld hervorgerufenen Magnetisierung der Welle 5 und geht mit einer identischen Veränderung der erfassten Bezugsgrößen-Differenz um einen von der Torsion abhängigen Beitrag $X_T$ auf beiden Kanälen einher.

Die Summe $\Sigma X_{12}$ aus der ersten und der zweiten Messgröße ergibt

$$\Sigma X_{12} = X_{E/R1} + X_{E/R2} = 2(X_S - X_T), \qquad (3)$$

und die Differenz $\Delta X_{12}$ zwischen der ersten und der zweiten Messgröße ergibt

$$\Delta X_{12} = X_{E/R1} - X_{E/R2} = 2\,X_R, \qquad (4)$$

sodass, da der statische Beitrag $X_S$ unabhängig ermittelbar ist (siehe unten), mittels Bildung der Summe und der Differenz eine Trennung und Ermittlung des rotationsgeschwindigkeitsabhängigen Beitrags $X_R$ und des torsionsabhängigen Beitrags $X_T$ ermöglicht ist. Demgemäß kann der von der Rotationsgeschwindigkeit abhängige Beitrag $X_R$ ermittelt werden zu

$$X_R = \Delta X_{12} / 2, \qquad\qquad (5)$$

und der von der Torsion abhängige Beitrag $X_T$ ermittelt werden zu

$$X_T = X_S - \Sigma X_{12} / 2. \qquad\qquad (6)$$

Der statische Beitrag $X_S$ kann z.B. mittels Messung im Ruhezustand der Welle ohne Rotation und ohne Torsion der Welle ermittelt werden oder identisch Null gesetzt werden.

Somit kann von der Messvorrichtung 3 gemäß Gleichung (5) anhand der Differenz zwischen der ersten und der zweiten Messgröße der von der Rotationsgeschwindigkeit $v_R$ abhängige Beitrag $X_R$ ermittelt werden, und basierend auf dem vorliegenden Beitrag $X_R$ die Rotationsgeschwindigkeit $v_R$ ermittelt werden, wobei $v_R$ durch die Tangentialgeschwindigkeit (in der Einheit m/s) oder die Winkelgeschwindigkeit (in der Einheit 1/s) gegeben sein kann. Bei bekanntem Durchmesser der Welle lassen sich die Tangentialgeschwindigkeit und die Winkelgeschwindigkeit problemlos ineinander umrechnen. Die Rotationsgeschwindigkeit $v_R$ kann von der Messvorrichtung 3 z.B. ermittelt werden, indem in der Messvorrichtung eine Referenz-Charakteristik hinterlegt wird, die jedem Wert von $X_R$ den zugehörigen Wert der Rotationsgeschwindigkeit $v_R$ zuordnet, z.B. mittels einer Zuordnungsfunktion $v_R = v_R(X_R)$, welche einem vorgegebenen Wert von $X_R$ als Funktionsargument eine zugehörige Rotationsgeschwindigkeit $v_R$ als Funktionswert zuordnet. Eine derartige Referenz-Charakteristik oder Zuordnungsfunktion kann z.B. mittels einer Kalibrierung, d.h. mittels gezielten Einstellens bekannter Rotationsgeschwindigkeiten und nachfolgende Messung des bei der jeweiligen Rotationsgeschwindigkeit vorliegenden Wertes von $X_R$, ermittelt werden. Beim Betreiben der Messvorrichtung 3 kann dann mittels Vergleichs des erfassten Wertes $X_R$ mit einer derartigen Referenz-Charakteristik einem erfassten Wert $X_R$ eine Rotationsgeschwindigkeit $v_R$ zugeordnet werden.

Demgemäß kann die Messvorrichtung 3 z.B. zum Ermitteln der Differenz $\Delta X_{12}$ zwischen der ersten und der zweiten Messgröße und zum Ermitteln der Rotationsgeschwindigkeit der Welle 5 basierend auf der Differenz ausgebildet sein.

Des Weiteren kann von der Messvorrichtung 3 gemäß Gleichung (6) anhand der Summe aus der ersten und der zweiten Messgröße (und anhand des bekannten statischen Beitrags $X_S$) der von der Torsion abhängige Beitrag $X_T$ ermittelt werden, und basierend auf dem vorliegenden Beitrag $X_T$ z.B. das an der Welle anliegende Drehmoment bzw. Torsionsmoment $M_T$ (in der Einheit Nm) ermittelt werden.

Das Torsionsmoment $M_T$ kann z.B. ermittelt werden, indem in der Messvorrichtung eine Referenz-Charakteristik hinterlegt wird, die jedem Wert von $X_T$ den zugehörigen Wert des Torsionsmoments $M_T$ zuordnet, z.B. mittels einer Zuordnungsfunktion $M_T = M_T(X_T)$, welche einem vorgegebenen Wert von $X_T$ als Funktionsargument ein zugehöriges Torsionsmoment $M_T$ als Funktionswert zuordnet. Eine derartige Referenz-Charakteristik oder Zuordnungsfunktion kann z.B. mittels einer Kalibrierung, d.h. mittels gezielten Einstellens bekannter Torsionsmomente und nachfolgende Messung des bei dem jeweiligen Torsionsmoment vorliegenden Wertes von $X_T$, ermittelt werden. Beim Betreiben der Messvorrichtung kann dann mittels Vergleichs des erfassten Wertes $X_T$ mit einer derartigen Referenz-Charakteristik einem erfassten Wert $X_T$ ein Torsionsmoment $M_T$ zugeordnet werden.

Demgemäß kann die Messvorrichtung 3 z.B. zum Ermitteln der Summe $\Sigma X_{12}$ aus der ersten und der zweiten Messgröße und zum Ermitteln der Torsion der Welle (z.B. zum Ermitteln des an der Welle anliegenden Drehmoments bzw. Torsionsmoments) basierend auf der Summe ausgebildet sein.

Des Weiteren kann die Messvorrichtung basierend auf der ersten und der zweiten Messgröße zum Charakterisieren der Positionierung der Messvorrichtung relativ zu der Welle ausgebildet sein, z.B. zum Ermitteln des Abstandes zwischen dem Magnetfelderzeuger bzw. Sensorelement und der Welle und/oder zum Ermitteln, ob der erste und der zweiten Magnetfelddetektor bzw. das Sensorelement symmetrisch bezüglich der Welle angeordnet sind.

Die Messvorrichtung kann z.B. zum Ermitteln der ersten und der zweiten Messgröße im Ruhezustand der Welle ohne Rotation und ohne Torsion der Welle ausgebildet sein. Des Weiteren kann die Messvorrichtung derart ausgebildet sein, dass es von ihr als symmetrische Positionierung des ersten und des zweiten Magnetfelddetektors bezüglich der Welle (und somit als korrekte Positionierung) gewertet wird, falls im Ruhezustand der Welle die erste Messgröße gleich der zweiten Messgröße ist.

Zudem kann die Messvorrichtung 3 zum Ermitteln von $X_S$ ausgebildet sein, z.B. mittels einer Messung im Ruhezustand der Welle 5 ohne Rotation und Torsion. Die Messvorrichtung 3 kann ferner zum Ermitteln des Abstandes a zwischen dem Magnetfelderzeuger 9 bzw. dem Sensorelement 25 und der Welle 5 basierend auf dem ermittelten Wert von $X_S$ ausgebildet sein (z.B. mittels Abgleichs eines ermittelten Wertes für Xs mit einer entsprechenden Referenz-Charakteristik analog zu dem oben mit Bezug auf $X_T$ und $X_R$ erläuterten Vorgehen).

Indem die Messvorrichtung 3 zum Erfassen der ersten Messgröße $X_{E/R1}$ und der zweiten Messgröße $X_{E/R2}$

sowie zum Ermitteln der Summe $\sum X_{12}$ aus der ersten und der zweiten Messgröße und/oder zum Ermitteln der Differenz $\Delta X_{12}$ zwischen der ersten und der zweiten Messgröße ausgebildet ist, können von der Messvorrichtung 3 somit $X_R$, $X_T$ und $X_S$ ermittelt werden und daraus Rückschlüsse auf den Rotationszustand der Welle 5 und die Positionierung der Welle 5 relativ zu dem Sensorelement 25 gezogen werden.

Eine Umsetzung der Bezugs- oder Beitragsgrößen $X_S$ in eine Lageangabe (in der Einheit m), $X_T$ in eine Torsionsangabe (in der Einheit Nm), und $X_R$ in eine Geschwindigkeitsangabe (Einheit m/s oder 1/s) kann z.B. durch eine Kalibration dieser Größen an bekannten Messgrößen wie Lage bzw. Lageänderung, Torsion und Geschwindigkeit und/oder durch Rückrechnung dieser gemessenen Größen in die mechanischen Größen Lage (in m), Torsion (in Nm) und Rotationsgeschwindigkeit (in m/s oder 1/s), wobei zudem die Temperatur als Parameter einbezogen werden kann.

Des Weiteren kann die Messvorrichtung 3 zum Ermitteln der von der Welle übertragenen mechanischen Leistung P gemäß

$$P = M_T(X_T) \cdot \omega(X_R) \qquad (7)$$

ausgebildet sein, wobei $\omega$ die Winkelgeschwindigkeit der Welle 5 bezeichnet.

Die Messvorrichtung 3 kann ferner zum Ermitteln des Wirkungsgrades $\eta$ der die Welle antreibenden Maschine gemäß

$$\eta = P / P_{in} \qquad (8)$$

ausgebildet sein, wobei P die übertragene Leistung und $P_{in}$ die aufgewendete Leistung bezeichnet.

Zudem kann die Messvorrichtung zur zeitlichen Mittelung der o.g. Größen (insbesondere der erfassten Messgrößen und/oder der erfassten Summe aus der ersten und der zweiten Messgröße und/oder der erfassten Differenz zwischen der ersten und der zweiten Messgröße und/oder der Leistung und/oder des Wirkungsgrades) über einen vorgegebenen Zeitraum ausgebildet sein, wodurch man zeitlich geglättete Messwerte erhalten kann.

Indem z.B. anstelle der Momentanwerte $X_{E/R1}$ und $X_{E/R2}$ in den obigen Gleichungen die zeitlich gemittelten Messgrößen $\langle X_{E/R1} \rangle$ und $\langle X_{E/R2} \rangle$ verwendet werden, können mittels der Messvorrichtung 3 die zeitlichen Mittelwerte der o.g. Parameter (z.B. die zeitlichen Mittelwerte von $X_S$, $X_R$, $X_T$, P, $\eta$ und der daraus berechneten Rotationsparameter, Lageparameter und sonstigen Operationsparameter) ermittelt werden. Die eckigen Klammern $\langle ... \rangle$ bezeichnen einen zeitlichen Mittelwert.

Bei Ausgestaltung der Messvorrichtung 3 als Luftspulenanordnung, d.h. ohne Flussleitstruktur, kann die Messvorrichtung im Wesentlichen unabhängig von thermischen Einflüssen sein, wobei die Messergebnisse keinem thermischen Drift unterliegen.

Die Messvorrichtung 3 kann (z.B. als Bestandteil des Sensorelements 25, siehe Figur 1B) eine Flussleitstruktur 23 zum Leiten des magnetischen Flusses aufweisen. Dadurch wird eine Verbesserung der magnetischen Kopplung ermöglicht. Durch die Verbesserung der magnetischen Kopplung zwischen der Welle 5 und dem Sensorelement 25 kann z.B. auf Grund einer Erhöhung der elektrischen Messgrößen der Messabstand a des Sensorelements 25 zur Welle 5 vergrößert werden. Eine Vergrößerung der elektrischen Messgrößen bedeutet in vielen Anwendungsfällen eine Verbesserung des Signal-Rausch-Verhältnisses (SNR).

Die von der Messvorrichtung 3 gelieferten Messergebnisse können einem thermischen Drift unterliegen, was (z.B. bei schwankender Umgebungstemperatur) zu einer Verfälschung der von der Messvorrichtung 3 ermittelten Messergebnisse führen kann. Ein derartiger thermischer Drift kann z.B. durch die Temperabhängigkeit der Materialeigenschaften der Flussleitstruktur 23 und/oder der Welle 5 verursacht werden. Das Einbringen einer hochpermeablen Flussleitstruktur 23 kann somit das oben erläuterte Messverfahren dahingehend beeinflussen, dass ein thermischer Drift die elektrischen Messgrößen $X_{E/R1}$ und $X_{E/R2}$ überlagert, welcher zur Verbesserung der Messgenauigkeit nachfolgend isoliert und kompensiert werden kann. Diese Temperaturabhängigkeit kann mittels eines temperaturabhängigen Korrekturparameters $X_\vartheta$ berücksichtigt werden (wobei $\vartheta$ die Temperatur bezeichnet), wodurch die Gleichungen (1) und (2) folgende Form annehmen:

$$X_{E/R1} = B_E - B_{R1} = X_S + X_R - X_T - X_\vartheta \qquad (9)$$

$$X_{E/R2} = B_E - B_{R2} = X_S - X_R - X_T - X_\vartheta. \qquad (10)$$

In diesem Fall ergibt die Summe $\Sigma X_{12}$ aus der ersten und der zweiten Messgröße

$$\Sigma X_{12} = X_{E/R1} + X_{E/R2} = 2(X_S - X_T - X_\vartheta), \qquad (11)$$

und die Differenz $\Delta X_{12}$ zwischen der ersten und der zweiten Messgröße ergibt weiterhin

$$\Delta X_{12} = X_{E/R1} - X_{E/R2} = 2\,X_R, \qquad (12)$$

sodass der rotationsabhängige Beitrag $X_R$ wie gehabt als

$$X_R = \Delta X_{12} / 2, \qquad (13)$$

ermittelt werden kann, wohingegen der torsionsabhängige Beitrag $X_T$ sich ergibt aus

$$X_T = X_S - X_\vartheta - \Sigma X_{12} / 2. \qquad (14)$$

Der geschwindigkeitsproportionale Anteil $X_R$ der Amplituden- oder Phasenänderung kann wiederum direkt ermittelt werden. Der torsionsproportionale Signalanteil $X_T$ ist neben dem als bekannt vorauszusetzenden Anteil $X_S$ von einem driftproportionalen Signalanteil $X_\vartheta$ überlagert.

Diesbezüglich kann vorgesehen sein, dass die Messvorrichtung 3 einen Temperatursensor 33 aufweist und zum Ermitteln des Wertes des temperaturabhängigen Korrekturparameters $X_\vartheta$ basierend auf der von dem Temperatursensor 33 erfassten Temperatur ausgebildet ist. Die Messvorrichtung 3 kann zudem gemäß Gleichung (14) anhand der Summe $\Sigma X_{12}$ aus der ersten und der zweiten Messgröße unter Berücksichtigung des ermittelten Wertes für $X_\vartheta$ zum Ermitteln des von der Torsion abhängige Beitrags $X_T$ ausgebildet sein, wobei basierend auf dem vorliegenden Beitrag $X_T$ z.B. das an der Welle anliegende Torsionsmoment $M_T$ (in der Einheit Nm) ermittelt werden kann.

Die Werte von $X_\vartheta$ für unterschiedliche Temperaturen $\vartheta$ können z.B. mittels einer Kalibrierung, d.h. mittels gezielten Einstellens bekannter Temperaturen und nachfolgende Ermittlung des bei der jeweiligen Temperatur vorliegenden Wertes von $X_\vartheta$, ermittelt werden und als Referenz-Charakteristik in der Messvorrichtung 3 hinterlegt werden. Gemäß Figur 1B ist der Temperatursensor 33 als Beispiel im Kontakt zu der Flussleitstruktur 23 angeordnet, sodass von dem Temperatursensor 33 die Temperatur der Flussleitstruktur 23 erfasst wird.

Anstelle der Momentanwerte $X_{E/R1}$ und $X_{E/R2}$ können auch in den obigen Gleichungen (13) und (14) zur Ermittlung zeitlich gemittelter Messergebnisse die zeitlich gemittelten Messgrößen $\langle X_{E/R1} \rangle$ und $\langle X_{E/R2} \rangle$ verwendet werden.

Alternativ zur Korrektur des thermisch bedingten Drifts mittels Messung der Temperatur kann vorgesehen sein, dass die Messvorrichtung 3 (z.B. indem die Energiequelle 27 entsprechend ausgebildet und angesteuert wird) zum Beaufschlagen der Erregerspule 9 mit mindestens zwei unterschiedlichen Anregungsfrequenzen und Auswerten der für die unterschiedlichen Anregungsfrequenzen vorliegenden Messgrößen ausgebildet ist. Es kann z.B. vorgesehen sein, dass die Messvorrichtung 3 zum Erfassen der Summe $\Sigma X_{12}$ für jede der Anregungsfrequenzen und zum Ermitteln des torsionsabhängigen Beitrages $X_T$ basierend auf den ermittelten Summen ausgebildet ist.

Als Beispiel kann die Messvorrichtung 3 zum (gleichzeitigen oder sequentiellen) Beaufschlagen der Erregerspule 9 mit einem ersten Erregersignal mit einer ersten Frequenz $\Omega_1$ und mit einem zweiten Erregersignal mit einer zweiten Frequenz $\Omega_2$ ausgebildet sein. Die Summe aus der ersten Messgröße und der zweiten Messgröße liegt dann für die beiden Anregungsfrequenzen $\Omega_1$, $\Omega_2$ vor:

$$\langle X_S - X_T - X_\vartheta \rangle_{\Omega_1} = \frac{1}{2} \sum \langle X_{E/R1} + X_{E/R2} \rangle_{\Omega_1} = \frac{1}{2} \sum \langle X_{12} \rangle_{\Omega_1} \qquad (15)$$

$$\langle X_S - X_T - X_\vartheta \rangle_{\Omega_2} = \frac{1}{2} \sum \langle X_{E/R1} + X_{E/R2} \rangle_{\Omega_2} = \frac{1}{2} \sum \langle X_{12} \rangle_{\Omega_2}. \qquad (16)$$

Mit einer systeminvarianten Übertragungsfunktion $G(\Omega_1,\Omega_2)$, welche rechnerisch oder experimentell für die Messanordnung ermittelt werden kann, lässt sich dieses lineare Gleichungssystem unter der Annahme von $\langle X_{Stat.} \rangle = 0$ oder $\langle X_{Stat.} \rangle \neq 0$ nach $X_\vartheta$ auflösen und somit ein eventueller thermischer Drift kompensieren. Mittels dieser frequenzbasierten Kompensationsmethode können zusätzlich zu Messgrößenänderungen, die auf Temperaturänderungen der Flussleitstruktur 23 zurückgehen, auch Messgrößenänderungen, die auf Temperaturänderungen der Welle 5 zurückgehen, kompensiert werden.

Alternativ zur Korrektur des thermischen Drifts kann auch vorgesehen sein, einen derartigen Drift von vornherein zu verhindern bzw. zu begrenzen, z.B. mittels Regelung der Temperatur (Thermostatisierung) der Messvorrichtung 3 bzw. des Sensorelements 25 oder von Teilen davon. Diesbezüglich kann vorgesehen sein, dass die Messvorrichtung 3 eine Temperiervorrichtung (nicht dargestellt) zum Temperieren der Flussleitstruktur auf eine vorgegebene konstante Temperatur aufweist.

Bei der Vorrichtung analog zu den Figuren 1A und 1B kann auch eine Auswertung mittels Vektorvoltmeter vorgesehen sein (nicht dargestellt), wie im Folgenden kurz beschrieben. Dabei wird das Ansteuersignal per Mikrocontroller erzeugt. Die Signalerzeugung erfolgt durch eine "Signalgenese" per "Lock-up Table" in welcher die zeitliche (Phase, Frequenz) und amplitudengetreue Wertevorgabe des Signals variabel vorgegeben ist. Jene Wertevorgabe, welche die zeitliche und amplitudengetreue Signalform diskret vorgibt, wird über eine "Direct-Digital Synthesis" in ein diskretes elektrisches Signal übersetzt. Ein "Digital-Analog Converter" ordnet den gewichteten Amplituden zum entsprechenden Zeitschritt einen Spannungswert zu und formt somit ein am Ausgang des D-A Umsetzers verfügbares analoges Signal. Dieses analoge Signal wird durch einen Verstärker in der Schaltung einer Konstantstromquelle beliebig verstärkt. Die vom Verstärker versorgte Senderinduktivität LE erzeugt ein Magnetfeld, welches in Abhängigkeit von Torsion und Winkelgeschwindigkeit etc. moduliert wird. Jene durch das Messobjekt modulierte magnetische Induktion der Senderspule wird durch die Empfängerspulen LR in ein analoges elektrisches Signal umgesetzt (D-A Wandlung). Die analogdigitale Wandlung wird durch die entsprechenden Konverter vorgenommen. Die nachgeschalteten Phasenvergleicher analysieren die "zufällige" Stellung des Phasenzeigers. Der Phasenzeiger des Referenzkanals wird um 90° verschoben, der des Messkanals wird variabel in eine Phase von relativ 90° zur Referenz nachgeregelt, um ein Orthogonalsystem der Messspannungen zu erhalten. Wird durch den Messeffekt dieses Orthogonalsystem durch eine Effekt-bedingte Phasenverschiebung de-justiert, kann diese aus den integrierten Spannungen Ux bzw. Uy berechnet werden.

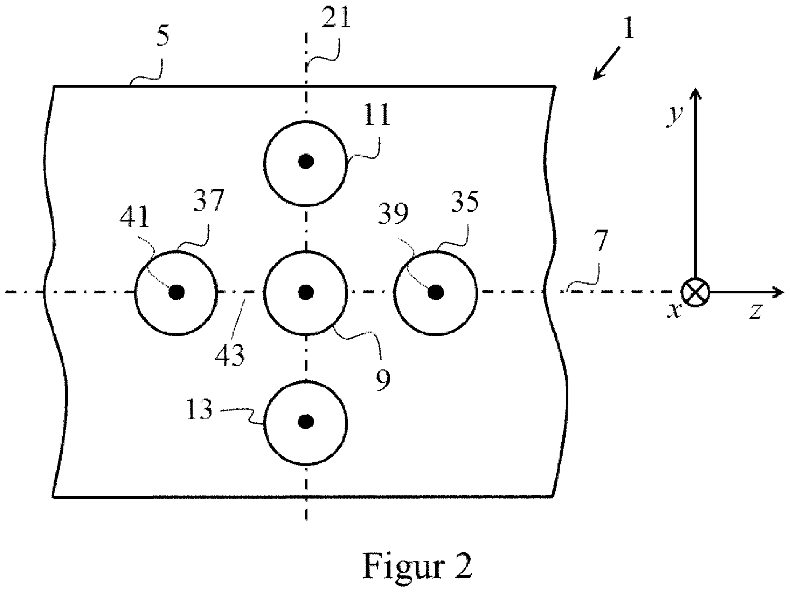

Figur 2 zeigt eine Messanordnung 1 mit einer Messvorrichtung 3 gemäß einer anderen Ausführungsform. Zusätzlich zu den mit Bezug auf die Figuren 1A und 1B erläuterten Elementen weist die Messvorrichtung 3 gemäß Figur 2 einen dritten Magnetfelddetektor 35 und einen vierten Magnetfelddetektor 37 auf. In Figur 2 sind der besseren Übersichtlichkeit halber die Energiequelle 27, die Auswertevorrichtung 29 und die optionale Flussleitstruktur 23 nicht dargestellt. Als Beispiel ist bei der Ausführung nach Figur 2 die Welle 5 eine Hohl- oder Vollwelle, die aus einem ferromagnetischen und elektrisch leitfähigen Material besteht.

Der dritte 35 und der vierte 37 Magnetfelddetektor sind als Beispiel jeweils als eine Spule ausgeführt, die auch als dritte Empfängerspule 35 und vierte Empfängerspule 37 bezeichnet werden. Der dritte und der vierte Magnetfelddetektor können jedoch auch in Form eines anderen magnetfeldsensitiven Detektors ausgebildet sein, z.B. als Hall-Detektor. Die Erregerspule 9 ist zwischen der dritten Empfängerspule 35 und der vierten Empfängerspule 37 angeordnet.

Gemäß Figur 2 sind die dritte Empfängerspule 35 und die vierte Empfängerspule 37 derart angeordnet, dass sie von der Erreger-Radialebene (xz-Ebene) geschnitten werden bzw. in der Erreger-Radialebene liegen. Die dritte 35 und vierte 37 Empfängerspule sind derart angeordnet, dass ihre Empfängerspulen-Achsen 39 bzw. 41 parallel zu der Erregerspulen-Achse 15 (und somit parallel zu der x-Achse bzw. der Erregerebenen-Radialrichtung) verlaufen. Somit verlaufen auch die Spulenachsen 17, 19, 39, 41 aller vier Empfängerspulen 11, 13, 35, 37 parallel zueinander. Die Sensor-Nebenachse 43, welche durch die Verbindungslinie zwischen der dritten 35 und der vierten 37 Empfängerspule gegeben ist, verläuft gemäß Figur 2 parallel zur z-Achse. Die Sensor-Nebenachse 43 verläuft somit senkrecht zu der Sensor-Hauptachse 21. Zudem verlaufen sowohl die Erregerspulen-Achse 15 als auch die Empfängerspulen-Achsen 17, 19, 39, 41 senkrecht zu der Sensor-Nebenachse 43. Gemäß Figur 2 verläuft somit die Sensor-Hauptachse 21 senkrecht zu der Erreger-Radialebene (xz-Ebene), wohingegen die Sensor-Nebenachse 23 innerhalb der Erreger-Radialebene liegt.

Die dritte 35 und die vierte 37 Empfängerspule sind identisch zueinander und identisch zu den übrigen Spulen 9, 11, 13 ausgebildet. Die dritte 35 und die vierte 37 Empfängerspule sind entlang der Sensor-Nebenachse 43 äquidistant symmetrisch beidseitig der Erregerspule 9 angeordnet. Die Erregerspule 9 ist somit mittig zwischen der dritten 35 und der vierten 37 Empfängerspule angeordnet. Zudem sind alle vier Empfängerspulen 11, 13, 35, 37 äquidistant zu der Erregerspule 9 angeordnet. Bei der Ausführungsform nach Figur 2 sind somit die vier Empfängerspulen kreuzförmig und in äquidistanten Abständen um die Erregerspule angeordnet.

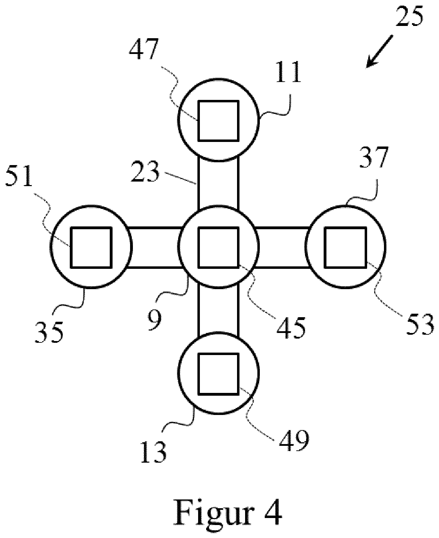

Die Messvorrichtung 3 gemäß Figur 2 kann optional eine kreuzförmige Flussleitstruktur mit fünf Polen gemäß Figur 4 aufweisen (in Figur 2 nicht dargestellt), wobei die Erregerspule 9 auf dem zentralen Pol 45 angeordnet ist und jeder der Empfängerspulen 11, 13, 35, 37 auf einem der peripheren Pole 47, 49, 51, 53 der kreuzförmigen Flussleitstruktur 23 angeordnet ist.

Der Abstand zwischen der Erregerspule 9 und der dritten Empfängerspule 35 ist kleiner als der Durchmesser der Welle 5. Auch der Abstand zwischen der Erregerspule 9 und der vierten Empfängerspule 37 ist kleiner als der Durchmesser der Welle 5. Der Innenquerschnitt und der Außenquerschnitt jeder der Spulen 9, 11, 13, 35, 37 ist kleiner als der Querschnitt der Welle 5. Zudem ist der Abstand zwischen der dritten Empfängerspule 35 und der vierten Empfängerspule 37 kleiner als der Durchmesser der Welle 5.

Das modifizierte Gesamt-Magnetfeld induziert auch in der dritten 35 und der vierten 37 Empfängerspule eine Spannung, die mit einem elektrischen Strom einhergeht. Die Auswertevorrichtung 29 ist auch mit der dritten 35 und der vierten 37 Empfängerspule verbunden (nicht dargestellt). Die Messvorrichtung 3 ist mittels der Auswertevorrichtung 29 zum Erfassen des an der dritten Empfängerspule 35 resultierenden elektrischen Stroms als drittes Ausgangssignal und zum Erfassen des an der vierten Empfängerspule 37 resultierenden Stroms als viertes Ausgangssignal ausgebildet. Alternativ dazu kann die Messvorrichtung 3 auch zum Erfassen der an der dritten Empfängerspule 35 resultierenden elektrischen Spannung als drittes Ausgangssignal und zum Erfassen der an der vierten Empfängerspule 37 resultierenden Spannung als viertes Ausgangssignal ausgebildet sein.

Die Messvorrichtung 3 gemäß Figur 2 ist analog zu der Ausführung nach den Figuren 1A, 1B zum Ermitteln der ersten Messgröße $X_{E/R1}$ als ersten Messkanal, zum Ermitteln der zweiten Messgröße $X_{E/R2}$ als zweiten Messkanal, zum Ermitteln der Summe $\sum X_{12}$ aus der ersten und der zweiten Messgröße, und zum Ermitteln der Differenz $\Delta X_{12}$ zwischen der ersten und der zweiten Messgröße ausgebildet.

Bei der Ausführungsform gemäß Figur 2 ist die Messvorrichtung 3 (zusätzlich zu der mit Bezug auf Figur 1 beschriebenen Funktionalität) zudem mittels der Auswertevorrichtung 29 zum Erfassen der amplitudenmäßigen und/oder phasenmäßigen Differenz zwischen dem Erregersignal und dem dritten Ausgangssignal als dritte Messgröße und zwischen dem Erregersignal und dem vierten Ausgangssignal als vierte Messgröße ausgebildet.

Bei der Ausführungsform gemäß Figur 2 ist die Messvorrichtung 3 (zusätzlich zu der mit Bezug auf Figur 1 beschriebenen Funktionalität) zudem mittels der Auswertevorrichtung 29 zum Ermitteln der Summe aus der dritten und der vierten Messgröße ausgebildet. Die Messvorrichtung 3 ist zudem mittels der Auswertevorrichtung 29 zum Ermitteln der Differenz zwischen der dritten und der vierten Messgröße ausgebildet. Zudem ist die Messvorrichtung 3 basierend auf der ermittelten Summe und der ermittelten Differenz zum Charakterisieren des Torsionszustandes, des Rotationszustandes und der Positionierung der Welle ausgebildet, wie nachfolgend erläutert.

Die dritte Messgröße $X_{E/R3}$ und die vierte Messgröße $X_{E/R4}$ können wie folgt geschrieben werden:

$$X_{E/R3} = B_E - B_{R3} \qquad\qquad (17)$$

$$X_{E/R4} = B_E - B_{R4}, \qquad\qquad (18)$$

wobei mit dem Index E der Magnetfelderzeuger 9 (hier: die Erregerspule 9), mit dem Index R3 der dritte Magnetfelddetektor 35 (hier: die dritte Empfängerspule 35), mit dem Index R4 der vierte Magnetfelddetektor 37 (hier: die vierte Empfängerspule 37), mit $B_E$ die Bezugsgröße des Erregersignals, mit $B_{R3}$ die Bezugsgröße des dritten Ausgangssignals, und mit $B_{R4}$ die Bezugsgröße des vierten Ausgangssignals bezeichnet ist, wobei die Bezugsgröße entweder die Amplitude oder die Phase des jeweiligen Signals ist.

Für die Messanordnung nach Figur 2 ergibt die Summe $\sum X_{34}$ aus der dritten Messgröße $X_{E/R3}$ und der vierten Messgröße $X_{E/R4}$

$$\sum X_{34} = X_{E/R3} + X_{E/R4} = 2(X_S - X_T), \qquad\qquad (19)$$

wobei die Ausführung nach Figur 2 als Beispiel zum Erfassen der Summe $\sum X_{34}$ als dritten Messkanal ausgebildet ist. Mit den Gleichungen (3) und (19) liegen somit zwei Gleichungen für die beiden Unbekannten $X_S$ und $X_T$ vor, sodass sowohl $X_T$ als auch $X_S$ ermittelt werden können. Demgemäß kann eine Kalibrierung von $X_S$ entfallen.

Somit kann bei der Ausführung nach Figur 2 die Messvorrichtung z.B. zum Ermitteln von $X_S$ basierend auf der Summe $\sum X_{12}$ aus der ersten und der zweiten Messgröße und auf der Summe $\sum X_{34}$ aus der dritten und der vierten Messgröße ausgebildet sein. Zudem kann die Messvorrichtung 3 zum Ermitteln des Abstandes a zwischen dem Sensorelement 25 und der Welle 5 basierend auf dem ermittelten Wert für $X_S$ ausgebildet sein.

Bei Ausgestaltung der Messvorrichtung 3 nach Figur 2 als Luftspulenanordnung, d.h. ohne Flussleitstruktur, kann die Messvorrichtung im Wesentlichen unabhängig von thermischen Einflüssen bzw. driftfrei sein, wobei die Messergebnisse keinem thermischen Drift unterliegen. Jedoch können auch die von der Messvorrichtung 3 nach Figur 2 gelieferten Messergebnisse einem thermischen Drift unterliegen, wobei ein derartiger thermischer Drift z.B. durch die Temperabhängigkeit der Materialeigenschaften der kreuzförmigen Flussleitstruktur 23 und/oder der Welle 5 verursacht werden kann. Dieser thermische Drift kann z.B. analog zu den mit Bezug auf die Ausführungsform nach den Figuren 1A und 1B beschriebenen Vorgehensweisen korrigiert oder verhindert werden. Bei Ausgestaltung der Messvorrichtung 3 mit einem Temperatursensor und Kompensation der thermischen Drift mittels eines Korrekturfaktors, der in Abhängigkeit von der mittels des Temperatursensors ermittelten Temperatur ermittelt wird, kann die Anzahl der erforderlichen Messkanäle bei drei belassen werden. Auch bei Verhindern eines thermischen Drifts mittels Thermostatisierung durch eine Temperiereinrichtung kann die Anzahl der erforderlichen Messkanäle bei drei belassen werden. Bei Kompensation des thermischen Drifts mittels Verwendens von Erregersignalen mit unterschiedlichen Frequenzen kann ein vierter Messkanal erforderlich sein.

Im Übrigen entsprechen der Aufbau und die Funktionsweise der Messanordnung nach Figur 2 denjenigen der Messanordnung nach den Figuren 1A, 1B, sodass diesbezüglich auf die Erläuterungen mit Bezug auf die Figuren 1A und 1B verwiesen wird.

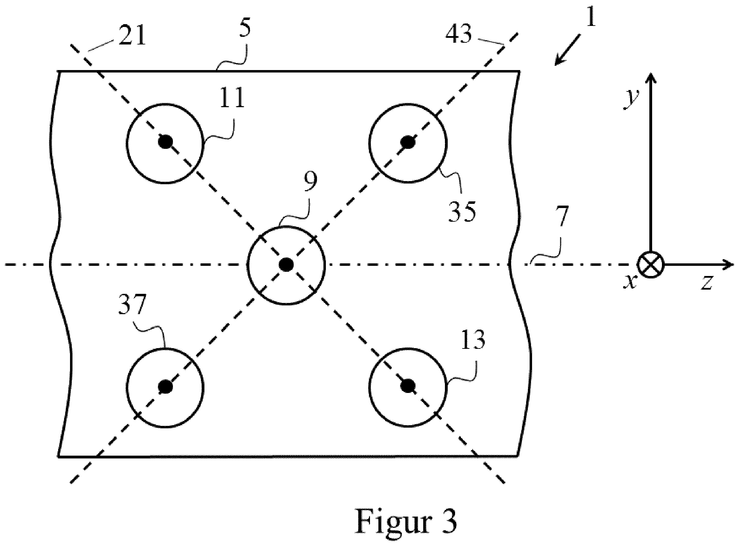

Figur 3 zeigt eine Messanordnung 1 gemäß einer anderen Ausführungsform, wobei die Spulenanordnung mit der Erregerspule 9 und den vier Empfängerspulen 11, 13, 35, 37 gegenüber der Ausführung nach Figur 2 mathematisch positiv um 45° gedreht ist, und zwar um die Erregerspulen-Achse 15 als Drehachse. Auch in Figur 3 sind der besseren Übersichtlichkeit halber die Energiequelle 27, die Auswertevorrichtung 29 und die optionale Flussleitstruktur 23 nicht dargestellt.

Gemäß Figur 3 sind die erste Empfängerspule 11 und die dritte Empfängerspule 35 auf einer Seite der durch die xz-Ebene gegebenen Erreger-Radialebene angeordnet (nämlich auf der Seite der xz-Ebene mit positiven y-Werten), wobei die zweite Empfängerspule 13 und die vierte Empfängerspule 37 auf der anderen Seite der Erreger-Radialebene angeordnet sind (nämlich auf der Seite der xz-Ebene mit negativen y-Werten). Bei der Ausführung nach Figur 3 bildet somit die Sensor-Hauptachse 21 einen Winkel von 45° mit der Erreger-Radialebene, wobei zudem auch die Sensor-Nebenachse 43 einen Winkel von 45° mit der Erreger-Radialebene bildet, wobei die Sensor-Nebenachse 43 analog zu Figur 2 senkrecht zu der Sensor-Hauptachse 21 verläuft.

Die Ausführung der Messanordnung und des Messverfahrens nach Figur 3 eignet sich besonders für Wellen 5, die an ihrem Außenumfang eine Beschichtung mit ferromagnetischem und elektrisch leitfähigem Material aufweisen (wobei der Rest der Welle aus nicht ferromagnetischem Material bestehen kann). Als Beispiel ist bei der Ausführung nach den Figur 3 die Welle 5 eine Hohl- oder Vollwelle aus einem nicht ferromagnetischen Material, die an ihrem Außenumfang mit einer Schicht aus einem ferromagnetischen und elektrisch leitfähigen Material beschichtet ist.

Für die Geometrie der Messanordnung 1 nach Figur 3 können die erste, zweite, dritte und vierte Messgröße dann wie folgt geschrieben werden:

$$X_{E/R1} = X_S + X_R + X_T \qquad\qquad (20)$$

$$X_{E/R2} = X_S - X_R + X_T \qquad\qquad (21)$$

$$X_{E/R3} = X_S + X_R - X_T \qquad\qquad (22)$$

$$X_{E/R4} = X_S - X_R - X_T, \qquad\qquad (23)$$

da eine (homogene) ferromagnetische Beschichtung der Welle entlang einer ersten Richtung (auch als Zugrichtung bezeichnet) auf Zug belastet wird und entlang einer zweiten Richtung (auch als Druckrichtung) auf Druck belastet wird, wenn an der Welle 5 ein Torsionsmoment anliegt und somit eine Torsion der Welle vorliegt. Dies geht mit einer Erhöhung der magnetischen Suszeptibilität in Zugrichtung und einer Verringerung der magnetischen Suszeptibilität in Druckrichtung einher.

Für den Fall, dass die Zugrichtung der Wellenbelastung bei Torsion entlang der Sensor-Hauptachse 21 und die Druckrichtung entlang der Sensor-Nebenachse 43 verläuft, ist $X_T$ positiv, wobei sich die erste Messgröße $X_{E/R1}$ und die zweite Messgröße $X_{E/R2}$ um den (torsionsabhängigen) Betrag $X_T$ vergrößern, und wobei sich die dritte Messgröße $X_{E/R3}$ und die vierte Messgröße $X_{E/R4}$ um denselben Betrag $X_T$ verringern.

Durch entsprechende Summen- und Differenzbildung können aus den Gleichungen (20) bis (23) die Beiträge $X_S$, $X_R$ und $X_T$ voneinander separiert und ermittelt werden. Da mit $X_S$, $X_R$ und $X_T$ drei Größen zu ermitteln sind, ist eine dreikanalige Messung erforderlich. Falls der statische Beitrag XS bekannt ist (z.B. aus einer separaten Messung ohne Rotation und Torsion der Welle 5), genügt eine zweikanalige Messung.

Bei Ausgestaltung der Messvorrichtung 3 nach Figur 3 als Luftspulenanordnung, d.h. ohne Flussleitstruktur, kann die Messvorrichtung im Wesentlichen unabhängig von thermischen Einflüssen bzw. driftfrei sein, wobei die Messergebnisse keinem thermischen Drift unterliegen. Jedoch können auch die von der Messvorrichtung 3 nach Figur 3 gelieferten Messergebnisse einem thermischen Drift unterliegen, wobei ein derartiger thermischer Drift z.B. durch die Temperabhängigkeit der Materialeigenschaften der kreuzförmigen Flussleitstruktur 23 und/oder der Welle 5 verursacht werden kann.

Diese Temperaturabhängigkeit kann mittels eines temperaturabhängigen Korrekturparameters $X_\vartheta$ berücksichtigt werden (wobei $\vartheta$ die Temperatur bezeichnet), wodurch die Gleichungen (20) bis (21) unter Berücksichtigung des temperaturabhängigen Korrekturparameters $X_\vartheta$ folgende Form annehmen:

$$X_{E/R1} = X_S + X_R + X_T - X_\vartheta \tag{24}$$

$$X_{E/R2} = X_S - X_R + X_T - X_\vartheta \tag{25}$$

$$X_{E/R3} = X_S + X_R - X_T - X_\vartheta \tag{26}$$

$$X_{E/R4} = X_S - X_R - X_T - X_\vartheta. \tag{27}$$

Somit erhöht sich (z.B. bei Einsatz einer magnetischen Flussleitstruktur aufgrund der Temperaturabhängigkeit von deren Materialeigenschaften) der Parameterraum um die Größe $X_\vartheta$, welche von den Größen $X_S$, $X_R$ und $X_T$ separiert werden muss.

Dieser thermische Drift kann z.B. analog zu den mit Bezug auf die Ausführungsform nach den Figuren 1A, 1B und 2 beschriebenen Vorgehensweisen korrigiert oder verhindert werden. Da mit $X_S$, $X_R$, $X_T$ und $X_\vartheta$ vier Größen zu ermitteln sind, ist eine vierkanalige Messung erforderlich. Falls der statische Beitrag $X_S$ bekannt ist (z.B. aus einer separaten Messung ohne Rotation und Torsion der Welle 5), genügt eine dreikanalige Messung. Bei Ausgestaltung der Messvorrichtung 3 gemäß Figur 3 mit einem Temperatursensor und Kompensation des thermischen Drifts mittels eines Korrekturfaktors, der in Abhängigkeit von der mittels des Temperatursensors ermittelten Temperatur ermittelt wird, kann die Anzahl der erforderlichen Messkanäle ebenfalls um einen Kanal reduziert werden. Auch bei Verhindern eines thermischen Drifts mittels Thermostatisierung durch eine Temperiereinrichtung kann die Anzahl der erforderlichen Messkanäle um einen Kanal reduziert werden. Bei Kompensation des thermischen Drifts mittels Verwendens von Erregersignalen mit unterschiedlichen Frequenzen können vier Messkanäle erforderlich sein.

Für den Fall, dass bei der Anordnung gemäß Figur 3 die Welle 5 eine Hohl- oder Vollwelle aus einem nicht ferromagnetischen Material ist, die an ihrem Außenumfang mit einer Schicht aus einem ferromagnetischen und elektrisch leitfähigen Material beschichtet ist (auch als laminierte Welle bezeichnet), sind im Vergleich zu der linearen Spulenanordnung grundsätzlich nur drei Spulen (inkl. der Senderspule) zur Detektion von Geschwindigkeit, Torsion und Lage notwendig. Eine Messung der genannten Parameter kann somit über die halbe Anordnung vorgenommen werden. Die zu Grunde liegenden Zusammenhänge ergeben sich wie folgt:

$$X_{E/R1} = X_S + X_R + X_T \tag{28}$$

$$X_{E/R2} = X_S - X_R + X_T \tag{29}$$

$$X_{E/R3} = X_S + X_R - X_T \tag{30}$$

$$X_{E/R4} = X_S - X_R - X_T, \tag{31}$$

Aus den Gleichungen (28) bis (31) folgt aus den Summen der paarweise zugeordneten Gleichungen:

$$\Sigma X_{14} = \Sigma X_{32} = 2\,X_S. \tag{32}$$

und aus den Differenzen folgt:

$$\Delta X_{14} = 2(X_R + X_T) \tag{33}$$

$$\Delta X_{32} = 2(X_R - X_T). \tag{34}$$

Da die Abnahme des Signals in Druckrichtung der Zunahme in Zugrichtung entspricht, sind die beiden Differenzen $\Delta X_{14}$ und $\Delta X_{32}$ vergleichbar bzw. äquivalent.

Die Anordnung nach Figur 3 kann auch für nichtlaminierte Messobjekte eingesetzt werden (Welle ohne Funktionsschicht), z.B. für vollständig aus ferromagnetischem und elektrisch leitfähigem Material bestehende Voll- oder Hohlwellen. Dabei sind im Vergleich zu der linearen Spulenanordnung grundsätzlich nur drei Spulen (inkl. der Erregerspule) zur Detektion von Geschwindigkeit, Torsion und Lage notwendig. Eine Messung der genannten Parameter kann somit über die halbe Anordnung vorgenommen werden. Die zu Grunde liegenden Zusammenhänge ergeben sich wie folgt:

$$X_{E/R1} = X_S + X_R - X_T \tag{35}$$

$$X_{E/R4} = X_S - X_R - X_T \tag{36}$$

oder wahlweise

$$X_{E/R3} = X_S + X_R - X_T \tag{37}$$

$$X_{E/R2} = X_S - X_R - X_T. \tag{38}$$

Aus den Gleichungen (35) bis (38) folgt aus der Summe der paarweise zugeordneten Gleichungen wieder:

$$\Sigma X_{14} = \Sigma X_{32} = 2(X_S - X_T) \tag{39}$$

und aus der Differenz:

$$\Delta X_{14} = \Delta X_{32} = 2X_R. \tag{40}$$

**Liste der verwendeten Bezugzeichen**

| | |
|---|---|
| 1 | Messanordnung |
| 3 | Messvorrichtung |
| 5 | Welle |
| 7 | Wellenlängsachse |
| 9 | Magnetfelderzeuger / Erregerspule |
| 11 | erster Magnetfelddetektor / erste Empfängerspule |
| 13 | zweiter Magnetfelddetektor / zweite Empfängerspule |
| 15 | Spulenachse der Erregerspule / Erregerspulen-Achse |
| 17 | Spulenachse der ersten Empfängerspule |
| 19 | Spulenachse der zweiten Empfängerspule |
| 21 | Sensor-Hauptachse |
| 23 | Flussleitstruktur |
| 25 | Sensorelement |
| 27 | elektrische Energiequelle |

| 29 | Auswertevorrichtung |
|---|---|
| 31 | Rotationsrichtung der Welle |
| 33 | Temperatursensor |
| 35 | dritter Magnetfelddetektor / dritte Empfängerspule |
| 37 | vierter Magnetfelddetektor / vierte Empfängerspule |
| 39 | Spulenachse der dritten Empfängerspule |
| 41 | Spulenachse der vierten Empfängerspule |
| 43 | Sensor-Nebenachse |
| 45 - 53 | Pole der kreuzförmigen Flussleitstruktur |
| a | Abstand zwischen Sensorelement und Welle |
| $X_{E/R1}$ | erste Messgröße |
| $X_{E/R2}$ | zweite Messgröße |
| $X_{E/R3}$ | dritte Messgröße |
| $X_{E/R4}$ | vierte Messgröße |
| $\Sigma X_{nm}$ | Summe aus der n-ten und der m-ten Messgröße |
| $\Delta X_{nm}$ | Differenz zwischen der n-ten und der m-ten Messgröße |

**Patentansprüche**

1. Messvorrichtung (3) zum Charakterisieren der Torsion, der Rotation und/oder der Positionierung einer Welle (5), aufweisend:

   - einen Magnetfelderzeuger (9) zum Erzeugen eines Magnetfeldes, einen ersten Magnetfelddetektor (11) und einen zweiten Magnetfelddetektor (13) zum Erfassen eines Magnetfeldes, wobei der Magnetfelderzeuger (9) zwischen dem ersten Magnetfelddetektor (11) und dem zweiten Magnetfelddetektor (13) angeordnet ist,
   - wobei die Messvorrichtung (3) zum Beaufschlagen des Magnetfelderzeugers (9) mit einem zeitlich periodisch variierenden elektrischen Erregersignal ausgebildet ist, sodass von dem Magnetfelderzeuger (9) ein zeitlich periodisch variierendes Magnetfeld erzeugt wird, wobei das Magnetfeld von der zu charakterisierenden Welle (5) modifiziert wird und von dem modifizierten Magnetfeld an dem ersten Magnetfelddetektor (11) ein erstes elektrisches Ausgangssignal und an dem zweiten Magnetfelddetektor (13) ein zweites elektrisches Ausgangssignal hervorgerufen wird, **dadurch gekennzeichnet, dass**
   - die Messvorrichtung (3) zum Erfassen der amplitudenmäßigen oder phasenmäßigen Differenz zwischen dem Erregersignal und dem ersten Ausgangssignal als erste Messgröße ($X_{E/R1}$) und zwischen dem Erregersignal und dem zweiten Ausgangssignal als zweite Messgröße ($X_{E/R2}$) ausgebildet ist, und
   - die Messvorrichtung (3) zum Ermitteln der Summe ($\Sigma X_{12}$) aus der ersten und der zweiten Messgröße und/oder zum Ermitteln der Differenz ($\Delta X_{12}$) zwischen der ersten und der zweiten Messgröße ausgebildet ist.

2. Messvorrichtung nach Anspruch 1, wobei der Magnetfelderzeuger (9) eine als Erregerspule (9) fungierende Spule ist.

3. Messvorrichtung nach Anspruch 1 oder 2, wobei der erste Magnetfelddetektor (11) eine als erste Empfängerspule (11) fungierende erste Spule und der zweite Magnetfelddetektor (13) eine als zweite Empfängerspule (13) fungierende zweite Spule ist.

4. Messvorrichtung nach Anspruch 2 und 3, wobei die Spulenachsen (15, 17, 19) der Erregerspule (9), der ersten Empfängerspule (11) und der zweiten Empfängerspule (13) in einem Abstand zueinander parallel zueinander verlaufen.

5. Messvorrichtung nach einem der Ansprüche 1 bis 4, wobei die Messvorrichtung (3) zum Beaufschlagen des Magnetfelderzeugers (9) mit mindestens zwei zeitlich periodischen elektrischen Erregersignalen mit unterschiedlichen Frequenzen ($\Omega_1$, $\Omega_2$) ausgebildet ist.

6. Messvorrichtung nach Anspruch 5, wobei die Messvorrichtung (3) zum Erfassen der ersten ($X_{E/R1}$) und der zweiten ($X_{E/R2}$) Messgröße für jede der Frequenzen ($\Omega_1$, $\Omega_2$), zum Ermitteln der Summe ($\Sigma\langle X_{12}\rangle_{\Omega_1}$, $\Sigma\langle X_{12}\rangle_{\Omega_2}$) aus der ersten und der zweiten Messgröße für jede der Frequenzen, und zum Ermitteln des an der Welle (5) anliegenden Torsionsmoments ($M_T$) basierend auf den mehreren Summen ausgebildet ist.

7. Messvorrichtung nach einem der Ansprüche 1 bis 6, wobei die Messvorrichtung (3) einen dritten Magnetfelddetektor (35) und einen vierten Magnetfelddetektor (37) aufweist, wobei der Magnetfelderzeuger (9) zwischen dem dritten Magnetfelddetektor (35) und dem vierten Magnetfelddetektor (37) angeordnet ist.

8. Messvorrichtung nach Anspruch 7, wobei der erste (11) und der zweite (13) Magnetfelddetektor an Positionen entlang einer Sensor-Hauptachse (21) angeordnet sind, der dritte (35) und der vierte (37) Magnetfelddetektor an Positionen entlang einer Sensor-Nebenachse (43) angeordnet sind, und die Sensor-Hauptachse (21) senkrecht zu der Sensor-Nebenachse (43) ist.

9. Messvorrichtung nach Anspruch 7 oder 8, wobei von dem modifizierten Magnetfeld an dem dritten Magnetfelddetektor (35) ein drittes elektrisches Ausgangssignal und an dem vierten Magnetfelddetektor (37) ein viertes elektrisches Ausgangssignal hervorgerufen wird,

   - wobei die Messvorrichtung (3) zum Erfassen der amplitudenmäßigen oder phasenmäßigen Differenz zwischen dem Erregersignal und dem dritten Ausgangssignal als dritte Messgröße ($X_{E/R3}$) und zwischen dem Erregersignal und dem vierten Ausgangssignal als vierte Messgröße ($X_{E/R4}$) ausgebildet ist, und
   - wobei die Messvorrichtung (3) zum Ermitteln der Summe ($\Sigma X_{34}$) aus der dritten und der vierten Messgröße und/oder zum Ermitteln der Differenz ($\Delta X_{34}$) zwischen der dritten und der vierten Messgröße ausgebildet ist.

10. Anordnung (1) zum Charakterisieren der Torsion, der Rotation und/oder der Positionierung einer Welle (5), aufweisend eine Messvorrichtung (3) nach einem der Ansprüche 1 bis 9, wobei die Welle (5) eine Wellenlängsachse (7) aufweist und der erste (11) und der zweite (13) Magnetfelddetektor bezüglich einer Ebene (xz-Ebene), die durch die Wellenlängsachse (7) und den Magnetfelderzeuger (9) verläuft, derart angeordnet sind, dass der erste Magnetfelddetektor (11) auf einer Seite der Ebene und der zweite Magnetfelddetektor (13) auf der anderen Seite der Ebene angeordnet ist.

11. Anordnung nach Anspruch 10, aufweisend eine Messvorrichtung (3) nach einem der Ansprüche 7 bis 9, wobei der dritte (35) und der vierte (37) Magnetfelddetektor bezüglich der durch den Magnetfelderzeuger (9) verlaufenden Ebene (xz-Ebene) derart angeordnet sind, dass die Ebene durch den dritten (35) und den vierten (37) Magnetfelddetektor verläuft.

12. Anordnung nach Anspruch 10, aufweisend eine Messvorrichtung (3) nach einem der Ansprüche 7 bis 9, wobei bezüglich der durch den Magnetfelderzeuger (9) verlaufenden Ebene (xz-Ebene) der dritte Magnetfelddetektor (35) auf derselben Seite der Ebene angeordnet ist wie der erste Magnetfelddetektor (11), und der vierte Magnetfelddetektor (37) auf derselben Seite der Ebene angeordnet ist wie der zweite Magnetfelddetektor (13).

13. Anordnung nach einem der Ansprüche 10 bis 12, wobei der Abstand zwischen dem Magnetfelderzeuger (9) und dem ersten Magnetfelddetektor (11) und/oder der Abstand zwischen dem Magnetfelderzeuger (9) und dem zweiten Magnetfelddetektor (13) kleiner ist als der Durchmesser der zu charakterisierenden Welle (5).

14. Verfahren zum Charakterisieren der Torsion, der Rotation und/oder der Positionierung einer Welle (5), aufweisend folgende Schritte:

   - Erzeugen eines die Welle (5) durchsetzenden, zeitlich periodisch variierenden Magnetfeldes mittels Beaufschlagens eines Magnetfelderzeugers (9) mit einem zeitlich periodisch variierenden elektrischen Erregersignal, wobei das Magnetfeld von der zu charakterisierenden Welle (5) modifiziert wird,
   - Erfassen eines ersten elektrischen Ausgangssignals, das die Stärke des modifizierten Magnetfeldes an einer ersten Position (11) repräsentiert, und eines zweiten elektrischen Ausgangssignals, das die Stärke des modifizierten Magnetfeldes an einer zweiten Position (13) repräsentiert, wobei die erste und die zweite Position nicht in einer gemeinsamen Radialebene (xz-Ebene) der Welle (5) angeordnet sind, **dadurch gekennzeichnet, dass** das Verfahren folgende Schritte aufweist:

   - Erfassen der amplitudenmäßigen oder phasenmäßigen Differenz zwischen dem Erregersignal und dem ersten elektrischen Ausgangssignal als erste Messgröße ($X_{E/R1}$) und zwischen dem Erregersignal und dem zweiten elektrischen Ausgangssignal als zweite Messgröße ($X_{E/R2}$), und
   - Ermitteln der Summe ($\Sigma X_{12}$) aus der ersten und der zweiten Messgröße und/oder der Differenz ($\Delta X_{12}$) zwischen der ersten und der zweiten Messgröße.

15. Verfahren nach Anspruch 14, ferner aufweisend die Schritte:

- Erfassen der amplitudenmäßigen oder phasenmäßigen Differenz zwischen dem Erregersignal und einem dritten elektrischen Ausgangssignal, das die Stärke des modifizierten Magnetfeldes an einer dritten Position (35) repräsentiert, als dritte Messgröße ($X_{E/R3}$) und zwischen dem Erregersignal und einem vierten elektrischen Ausgangssignal, das die Stärke des modifizierten Magnetfeldes an einer vierten Position (37) repräsentiert, als vierte Messgröße ($X_{E/R4}$), und
- Ermitteln der Summe ($\Sigma X_{34}$) aus der dritten und der vierten Messgröße und/oder der Differenz ($\Delta X_{34}$) zwischen der dritten und der vierten Messgröße.

**Claims**

1. Measuring apparatus (3) for characterizing the torsion, the rotation and/or the positioning of a shaft (5), having:

   - a magnetic field generator (9) for generating a magnetic field, a first magnetic field detector (11) and a second magnetic field detector (13) for detecting a magnetic field, wherein the magnetic field generator (9) is arranged between the first magnetic field detector (11) and the second magnetic field detector (13),
   - wherein the measuring apparatus (3) is designed to apply a chronologically periodically varying electrical excitation signal to the magnetic field generator (9), so that a chronologically periodically varying magnetic field is generated by the magnetic field generator (9), wherein the magnetic field is modified by the shaft (5) to be characterized and a first electrical output signal is induced at the first magnetic field detector (11) and a second electrical output signal is induced at the second magnetic field detector (13) by the modified magnetic field,
   **characterized in that**
   - the measuring apparatus (3) is designed to detect the difference with respect to amplitude or phase between the excitation signal and the first output signal as a first measured variable ($X_{E/R1}$) and between the excitation signal and the second output signal as a second measured variable ($X_{E/R2}$), and
   - the measuring apparatus (3) is designed to ascertain the sum ($\Sigma X_{12}$) of the first and the second measured variable and/or to ascertain the difference ($\Delta X_{12}$) between the first and the second measured variable.

2. Measuring apparatus according to Claim 1, wherein the magnetic field generator (9) is a coil which functions as a field coil (9).

3. Measuring apparatus according to Claim 1 or 2, wherein the first magnetic field detector (11) is a first coil which functions as a first receiver coil (11) and the second magnetic field detector (13) is a second coil which functions as a second receiver coil (13).

4. Measuring apparatus according to Claims 2 and 3, wherein the coil axes (15, 17, 19) of the field coil (9), the first receiver coil (11) and the second receiver coil (13) run parallel to one another at a distance from one another.

5. Measuring apparatus according to one of Claims 1 to 4, wherein the measuring apparatus (3) is designed to apply at least two chronologically periodic electrical excitation signals with different frequencies ($\Omega_1$, $\Omega_2$) to the magnetic field generator (9).

6. Measuring apparatus according to Claim 5, wherein the measuring apparatus (3) is designed to detect the first ($X_{E/R1}$) and the second ($X_{E/R2}$) measured variable for each of the frequencies ($\Omega_1$, $\Omega_2$), to ascertain the sum ($\Sigma(X_{12})_{\Omega_1}$, $\Sigma(X_{12})_{\Omega_2}$) of the first and the second measured variable for each of the frequencies, and to ascertain the torsional moment ($M_T$) which is applied to the shaft (5) based on the several sums.

7. Measuring apparatus according to one of Claims 1 to 6, wherein the measuring apparatus (3) has a third magnetic field detector (35) and a fourth magnetic field detector (37), wherein the magnetic field generator (9) is arranged between the third magnetic field detector (35) and the fourth magnetic field detector (37).

8. Measuring apparatus according to Claim 7, wherein the first (11) and the second (13) magnetic field detector are arranged in positions along a sensor main axis (21), the third (35) and the fourth (37) magnetic field detector are arranged in positions along a sensor secondary axis (43), and the sensor main axis (21) is perpendicular to the sensor secondary axis (43).

9. Measuring apparatus according to Claim 7 or 8, wherein a third electrical output signal is induced at the third magnetic field detector (35) and a fourth electrical output signal is induced at the fourth magnetic field detector (37) by the modified magnetic field,

- wherein the measuring apparatus (3) is designed to detect the difference with respect to amplitude or phase between the excitation signal and the third output signal as a third measured variable ($X_{E/R3}$) and between the excitation signal and the fourth output signal as a fourth measured variable ($X_{E/R4}$), and
- wherein the measuring apparatus (3) is designed to ascertain the sum ($\Sigma X_{34}$) of the third and the fourth measured variable and/or to ascertain the difference ($\Delta X_{34}$) between the third and the fourth measured variable.

10. Arrangement (1) for characterizing the torsion, the rotation and/or the positioning of a shaft (5), having a measuring apparatus (3) according to one of Claims 1 to 9, wherein the shaft (5) has a shaft longitudinal axis (7) and the first (11) and the second (13) magnetic field detector are arranged with respect to a plane (xz plane), which runs through the shaft longitudinal axis (7) and the magnetic field generator (9), in such a way that the first magnetic field detector (11) is arranged on one side of the plane and the second magnetic field detector (13) is arranged on the other side of the plane.

11. Arrangement according to Claim 10, having a measuring apparatus (3) according to one of Claims 7 to 9, wherein the third (35) and the fourth (37) magnetic field detector are arranged with respect to the plane (xz plane), which runs through the magnetic field generator (9), in such a way that the plane runs through the third (35) and the fourth (37) magnetic field detector.

12. Arrangement according to Claim 10, having a measuring apparatus (3) according to one of Claims 7 to 9, wherein, with respect to the plane (xz plane) which runs through the magnetic field generator (9), the third magnetic field detector (35) is arranged on the same side of the plane as the first magnetic field detector (11), and the fourth magnetic field detector (37) is arranged on the same side of the plane as the second magnetic field detector (13).

13. Arrangement according to one of Claims 10 to 12, wherein the distance between the magnetic field generator (9) and the first magnetic field detector (11) and/or the distance between the magnetic field generator (9) and the second magnetic field detector (13) is smaller than the diameter of the shaft (5) to be characterized.

14. Method for characterizing the torsion, the rotation and/or the positioning of a shaft (5), comprising the following steps:

- generating a chronologically periodically varying magnetic field, which passes through the shaft (5), by means of applying a chronologically periodically varying electrical excitation signal to a magnetic field generator (9), wherein the magnetic field is modified by the shaft (5) to be characterized,
- detecting a first electrical output signal, which represents the strength of the modified magnetic field in a first position (11), and a second electrical output signal, which represents the strength of the modified magnetic field in a second position (13), wherein the first and the second position are not arranged in a common radial plane (xz plane) of the shaft (5), **characterized in that** the method comprises the following steps:

- detecting the difference with respect to amplitude or phase between the excitation signal and the first electrical output signal as a first measured variable ($X_{E/R1}$) and between the excitation signal and the second electrical output signal as a second measured variable ($X_{E/R2}$), and
- ascertaining the sum ($\Sigma X_{12}$) of the first and the second measured variable and/or the difference ($\Delta X_{12}$) between the first and the second measured variable.

15. Method according to Claim 14, further comprising the steps of:

- detecting the difference with respect to amplitude or phase between the excitation signal and a third electrical output signal, which represents the strength of the modified magnetic field in a third position (35), as a third measured variable ($X_{E/R3}$) and between the excitation signal and a fourth electrical output signal, which represents the strength of the modified magnetic field at a fourth position (37), as a fourth measured variable ($X_{E/R4}$), and
- ascertaining the sum ($\Sigma X_{34}$) of the third and the fourth measured variable and/or the difference ($\Delta X_{34}$) between the third and the fourth measured variable.

**Revendications**

1. Dispositif de mesure (3) destiné à caractériser la torsion, la rotation et/ou le positionnement d'un arbre (5), comprenant :

   - un générateur de champ magnétique (9) destiné à générer un champ magnétique, un premier détecteur de champ magnétique (11) et un deuxième détecteur de champ magnétique (13) destinés à détecter un champ magnétique, le générateur de champ magnétique (9) étant disposé entre le premier détecteur de champ magnétique (11) et le deuxième détecteur de champ magnétique (13),
   - le dispositif de mesure (3) étant configuré pour appliquer au générateur de champ magnétique (9) un signal d'excitation électrique à variation périodique dans le temps, de sorte qu'un champ magnétique à variation périodique dans le temps soit généré par le générateur de champ magnétique (9), le champ magnétique étant modifié par l'arbre (5) à caractériser et un premier signal de sortie électrique étant produit par le champ magnétique modifié au niveau du premier détecteur de champ magnétique (11) et un deuxième signal de sortie électrique au niveau du deuxième détecteur de champ magnétique (13),
   **caractérisé en ce que**
   - le dispositif de mesure (3) est configuré pour acquérir la différence d'amplitudes ou la différence de phases entre le signal d'excitation et le premier signal de sortie sous la forme d'une première grandeur de mesure ($X_{E/R1}$) et entre le signal d'excitation et le deuxième signal de sortie sous la forme d'une deuxième grandeur de mesure ($X_{E/R2}$), et
   - le dispositif de mesure (3) est configuré pour déterminer la somme ($\Sigma X_{12}$) de la première et de la deuxième grandeur de mesure et/ou pour déterminer la différence ($\Delta X_{12}$) entre la première et la deuxième grandeur de mesure.

2. Dispositif de mesure selon la revendication 1, le générateur de champ magnétique (9) étant réalisé sous la forme d'une bobine qui fait office de bobine d'excitation (9).

3. Dispositif de mesure selon la revendication 1 ou 2, le premier détecteur de champ magnétique (11) étant une première bobine qui fait office de première bobine de réception (11) et le deuxième détecteur de champ magnétique (13) une deuxième bobine qui fait office de deuxième bobine de réception (13).

4. Dispositif de mesure selon les revendications 2 et 3, les axes de bobine (15, 17, 19) de la bobine d'excitation (9), de la première bobine de réception (11) et de la deuxième bobine de réception (13) suivant un tracé parallèle en étant espacés les uns aux autres.

5. Dispositif de mesure selon l'une des revendications 1 à 4, le dispositif de mesure (3) étant configuré pour appliquer au générateur de champ magnétique (9) au moins deux signaux d'excitation électriques à variation périodique dans le temps ayant des fréquences ($\Omega_1$, $\Omega_2$) différentes.

6. Dispositif de mesure selon la revendication 5, le dispositif de mesure (3) étant configuré en vue d'acquérir la première ($X_{E/R1}$) et la deuxième grandeur de mesure ($X_{E/R2}$) pour chacune des fréquences ($\Omega_1$, $\Omega_2$), en vue de déterminer la somme ($\Sigma(X_{12})_{\Omega 1}$, $\Sigma$-$(X_{12})_{\Omega 2}$) de la première et de la deuxième grandeur de mesure pour chacune des fréquences et en vue de déterminer le moment de torsion ($M_T$) présent au niveau de l'arbre (5) en se basant sur les plusieurs sommes.

7. Dispositif de mesure selon l'une des revendications 1 à 6, le dispositif de mesure (3) comprenant un troisième détecteur de champ magnétique (35) et un quatrième détecteur de champ magnétique (37), le générateur de champ magnétique (9) étant disposé entre le troisième détecteur de champ magnétique (35) et le quatrième détecteur de champ magnétique (37).

8. Dispositif de mesure selon la revendication 7, le premier (11) et le deuxième (13) détecteur de champ magnétique étant disposés à des positions le long d'un axe principal de capteur (21), le troisième (35) et le quatrième (37) détecteur de champ magnétique à des positions le long d'un axe secondaire de capteur (43) et l'axe principal de capteur (21) étant perpendiculaire à l'axe secondaire de capteur (43).

9. Dispositif de mesure selon la revendication 7 ou 8, un troisième signal de sortie électrique étant produit par le champ magnétique modifié au niveau du troisième détecteur de champ magnétique (35) et un quatrième signal de sortie électrique au niveau du quatrième détecteur de champ magnétique (37),

- le dispositif de mesure (3) étant configuré pour acquérir la différence d'amplitudes ou la différence de phases entre le signal d'excitation et le troisième signal de sortie sous la forme d'une troisième grandeur de mesure ($X_{E/R3}$) et entre le signal d'excitation et le quatrième signal de sortie sous la forme d'une quatrième grandeur de mesure ($X_{E/R4}$), et
- le dispositif de mesure (3) étant configuré pour déterminer la somme ($\sum X_{34}$) de la troisième et de la quatrième grandeur de mesure et/ou pour déterminer la différence ($\Delta X_{34}$) entre la troisième et la quatrième grandeur de mesure.

10. Arrangement (1) destiné à caractériser la torsion, la rotation et/ou le positionnement d'un arbre (5), comprenant un dispositif de mesure (3) selon l'une des revendications 1 à 9, l'arbre (5) possédant un axe longitudinal d'arbre (7) et le premier (11) et le deuxième (13) détecteur de champ magnétique étant disposés par rapport à un plan (plan xz) qui suit un tracé à travers l'axe longitudinal d'arbre (7) et le générateur de champ magnétique (9) de telle sorte que le premier détecteur de champ magnétique (11) est disposé d'un côté du plan et le deuxième détecteur de champ magnétique (13) de l'autre côté du plan.

11. Arrangement selon la revendication 10, comprenant un dispositif de mesure (3) selon l'une des revendications 7 à 9, le troisième (35) et le quatrième (37) détecteur de champ magnétique étant disposés par rapport au plan (plan xz) qui suit un tracé à travers le générateur de champ magnétique (9) de telle sorte que le plan passe à travers le troisième (35) et le quatrième (37) détecteur de champ magnétique.

12. Arrangement selon la revendication 10, comprenant un dispositif de mesure (3) selon l'une des revendications 7 à 9, le troisième détecteur de champ magnétique (35) étant disposé du même côté du plan que le premier détecteur de champ magnétique (11) en référence au plan (plan xz) qui suit un tracé à travers le générateur de champ magnétique (9), et le quatrième détecteur de champ magnétique (37) étant disposé du même côté du plan que le deuxième détecteur de champ magnétique (13).

13. Arrangement selon l'une des revendications 10 à 12, l'écart entre le générateur de champ magnétique (9) et le premier détecteur de champ magnétique (11) et/ou l'écart entre le générateur de champ magnétique (9) et le deuxième détecteur de champ magnétique (13) étant plus petit que le diamètre de l'arbre (5) à caractériser.

14. Procédé pour caractériser la torsion, la rotation et/ou le positionnement d'un arbre (5), comprenant les étapes suivantes :

- génération d'un champ magnétique à variation périodique dans le temps qui traverse l'arbre (5) en appliquant à un générateur de champ magnétique (9) un signal d'excitation électrique à variation périodique dans le temps, le champ magnétique étant modifié par l'arbre (5) à caractériser,
- acquisition d'un premier signal de sortie électrique qui représente l'intensité du champ magnétique modifiée au niveau d'une première position (11), et d'un deuxième signal de sortie électrique qui représente l'intensité du champ magnétique modifiée au niveau d'une deuxième position (13), la première et la deuxième position n'étant pas disposées dans un plan radial (plan xz) commun de l'arbre (5), **caractérisé en ce que** le procédé comprend les étapes suivantes :

- acquisition de la différence d'amplitudes ou de phases entre le signal d'excitation et le premier signal de sortie électrique sous la forme d'une première grandeur de mesure ($X_{E/R1}$) et entre le signal d'excitation et le deuxième signal de sortie électrique sous la forme d'une deuxième grandeur de mesure ($X_{E/R2}$), et
- détermination de la somme ($\sum X_{12}$) de la première et de la deuxième grandeur de mesure et/ou de la différence ($\Delta X_{12}$) entre la première et la deuxième grandeur de mesure.

15. Procédé selon la revendication 14, comprenant en outre les étapes suivantes :

- acquisition de la différence d'amplitudes ou de phases entre le signal d'excitation et un troisième signal de sortie électrique, qui représente l'intensité du champ magnétique modifié au niveau d'une troisième position (35), sous la forme d'une troisième grandeur de mesure ($X_{E/R3}$) et entre le signal d'excitation et un quatrième signal de sortie électrique, qui représente l'intensité du champ magnétique modifié au niveau d'une quatrième position (37), sous la forme d'une quatrième grandeur de mesure ($X_{E/R4}$), et
- détermination de la somme ($\sum X_{34}$) de la troisième et de la quatrième grandeur de mesure et/ou de la différence ($\Delta X_{34}$) entre la troisième et la quatrième grandeur de mesure.

Figur 1A

EP 3 631 394 B1

Figur 1B

Figur 2

EP 3 631 394 B1

Figur 3

EP 3 631 394 B1

Figur 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2549255 B1
- WO 2017076876 A1
- EP 2615439 A1
- DE 102006017727 A1